# EUROPÄISCHE PATENTANMELDUNG

(11) **EP 1 830 000 A1**
(43) Veröffentlichungstag der Anmeldung: **05.09.2007**
(21) Anmeldenummer: 06110575.5
(22) Anmeldetag: 01.03.2006
(51) Int. Cl.: D06M 11/83

(54) **Antimikrobielles Material bestehend aus Polyacrylonitrile mit gebundenen metallische und nichtmetallische Kationen**

(71) Anmelder: REBAC GMBH, 40724 Hilden (DE)
(72) Erfinder: Die Erfindernennung liegt noch nicht vor
(74) Vertreter: Helbing, Jörg

(57) **Zusammenfassung**

Gegenstand der vorliegenden Erfindung ist ein antimikrobielles Material bestehend aus einem Trägerpolymer, an welches metallische und nichtmetallische Kationen gebunden sind, ein Verfahren zu seiner Herstellung und seine Verwendung.

## Beschreibung

Gegenstand der vorliegenden Erfindung ist ein antimikrobielles Material bestehend aus einem Trägerpolymer, an welches metallische und nichtmetallische Kationen gebunden sind, ein Verfahren zu seiner Herstellung und seine Verwendung.

### Hintergrund

Im vergangenen Jahrzehnt wurde eine Reihe von antimikrobiellen Materialien entwickelt, welche nicht in Medikamenten zum Einsatz kommen. Einige dieser Materialien sind Beschichtungen aus metallischen Ionen, welche auf die Oberfläche von Geräten aufgebracht werden. Andere bilden eine scharfkantige Mikrooberfläche, die Bakterienzellen durch mechanische Wechselwirkungen zerstören kann. Es sind auch Materialien bekannt, in denen Metallionen bestimmter Gruppen (z. B. Ag⁺, Cu²⁺ oder Zn²⁺) an Gewebe oder Partikel gebunden werden, um eine antimikrobielle Wirkung zu erzielen. Insbesondere Silberprodukte (auch Nanosilber) haben jedoch wegen ihres hohen Preises nur geringen Eingang in die industrielle Praxis gefunden. Auch wird die Waschfestigkeit solcher Produkte diskutiert.

So beschreibt CN 87100231 eine antiseptische und desodorierende Faser, bestehend aus (a) einem Polyacrylnitrilterpolymer hergestellt aus Acrylnitril (erstes Monomer), Methylacrylat (zweites Monomer) und Natriumallylsulfonat oder Itaconsäure (drittes Monomer), (b) Kupferionen, und (c) Malachitgrün IV. Die beiden letztgenannten Komponenten sind an das Polyacrylnitril durch nichtkovalente Wechselwirkungen gebunden. Die Faser gemäß CN 87100231 wird aus Polyacrylnitril-Faser oder aus Polyacrylnitril-Gewebe hergestellt, die/das zunächst mit einer Kupfersulfat-/Natriumthiosulfat-Lösung und anschließend mit einer Malachitgrün IV-Lösung umgesetzt wird. Das Verhältnis Terpolymer : CuSO₄ : NaS₂O₆: Malachitgrün IV beträgt 1 : (0,05-0,5) : (0,01-0,1) : (0,001-0,01).

Andererseits besitzen antimikrobielle Materialien, in denen die antimikrobiell wirksamen Komponenten nicht direkt an das Material gebunden sind, einen signifikanten Nachteil: die antimikrobiell wirksamen Komponenten können aus dem Material hinaus diffundieren oder ausgewaschen werden. Das Resultat ist eine Abnahme der antimikrobiellen Aktivität und eine unkontrollierbare Ausbreitung dieser Aktivität in der Umgebung des Materials. Darüber hinaus verlieren Fasern und Gewebe aus solchen Materialien, die häufig gewaschen werden, ihre antimikrobielle Wirksamkeit sehr schnell. Dies trifft in gewissem Umfang auch auf die Faser der CN 87100231 zu.

Darüberhinaus ist ein weiterer antimikrobieller Wirkstoff bekannt, der Ammoniumionen enthält, nämlich 3-Trimethyloxysilylpropyldimethyloctadecylammoniumchlorid (AEM 5700; microbeshield®). Diese Verbindung wird zur antimikrobiellen Ausrüstungen von Textilien verwendet. Ihre Bindung an das Material erfolgt über das Silan. Die antimikrobielle Wirkung beruht nach Angaben des Herstellers darauf, dass die im Molekül enthaltene C18 Kette mit der Zellmembran in Wechselwirkung tritt und der dadurch hergestellte Kontakt zwischen dem kationischen Stickstoffatom und der Zelle zur Zerstörung der Zelle führt.

In Vlies und Filzen ("Nonwovens") ist die Kontrolle von Mikroorganismen von besonderer Wichtigkeit, da diese Materialien häufig im medizinischen Bereich zum Einsatz kommen. "Nonwovens" bieten einen idealen Lebensraum für medizinisch relevante Mikroorganismen, insbesondere für pathogene Bakterien und Pilze. Somit ist die Unterdrückung von Mikroorganismen in "nonwovens" nicht nur für medizinische Anwendungen wichtig, sondern auch für solche Vliesstoffe oder Filze, die in Kleidungsstücken und Haushaltswaren, wie z. B. Filtern für Abluftanlagen und Klimaanlagen, Staubsaugerbeuteln und -filtern, für Einlagestoffe zwischen dem Oberstoff und dem Innenfutter, Sakkos, Blusen, Kleider, Mäntel und die Kragen der Hemden, Futter in Taschen und Koffern, Auskleidung von Schuhen, Reinigungstücher, in der Industrie zum Filtern und Isolieren, für Heftpflaster und Wundverbände, für sterilisierte Kitteln, Hauben und Masken, zur Abdeckung von Patienten mit Tüchern aus Vliesstoff, für Windeln zum Einsatz kommen. Auf Feldern schützen Vliesstoffe Jungpflanzen vor Schädlingen und Kälte, und als "Geotextilien" trennen sie Erdschichten und Schüttgüter. Bei Teppichböden, bei den an die Formen der Autos angepaßten textilen Innenraumauskleidungen und bei Dachbahnen werden Vliesstoffe als Trägermaterial eingesetzt.

Vliesstoffe haben einen grundsätzlichen Vorzug: Bereits im ersten Arbeitsschritt lassen sich aus Fasern textile Flächengebilde herstellen. Dadurch unterscheiden sich Vliesstoffe von Geweben und Gewirken, denn diese sind auf eine Vorstufe angewiesen, nämlich die Produktion von Fäden oder Garnen. Vliesstoffe lassen sich daher vergleichsweise kostengünstig herstellen.

Der überwiegende Teil der bekannten antimikrobiellen Materialien enthält entweder nur Metallionen oder nur Nichtmetallionen, die an das Material gebunden sind. Diesen Materialien fehlt zwangsläufig die kooperative antimikrobielle Wirkung von metallischen mit nichtmetallischen Ionen.

Es besteht daher Bedarf an einem neuen antimikrobiellen Material mit verbesserten Eigenschaften, das einerseits eine dauerhafte hohe antimikrobielle Wirksamkeit besitzt, geringe Tendenz zum Auswaschen zeigt und sich andererseits durch einfache Herstellung, Handhabung und Weiterverarbeitung auszeichnet. Bisher erfüllte keines der bekannten Produkte alle Anforderungen, die an ein solches Produkt gestellt werden.

Darüber hinaus ist die Herstellung, Lagerung und/oder der Transport von nichtpharmazeutischen antimikrobiellen Materialien heute häufig immer noch teuer und aufwendig.

### Zusammenfassung der Erfindung

Die Erfindung betrifft ein antimikrobielles Material bestehend aus einem Trägerpolymer, an welches metallische und nichtmetallische Kationen gebunden sind. Der überwiegende Teil der bekannten antimikrobiellen Materialien enthält dagegen entweder nur Metallionen oder nur Nichtmetallionen, die an das Material gebunden sind. Diesen Materialien fehlt zwangsläufig die kooperative antimikrobielle Wirkung von metallischen mit nichtmetallischen Ionen. Diese kooperative antimikrobielle Wirkung von metallischen mit nichtmetallischen Ionen ist überraschend und war aus dem bisherigen Stand der Technik nicht abzuleiten.

Überraschend ist die große Diffusionsbeständigkeit der neuen Materialien, wodurch eine Abnahme der antimikrobiellen Aktivität und eine unkontrollierbare Ausbreitung dieser Aktivität in der Umgebung des Materials vermieden wird. Darüber hinaus verlieren Fasern und Gewebe aus erfindungsgemäßen Materialien, die häufig gewaschen werden, nicht ihre antimikrobielle Wirksamkeit.

Sowohl das Metallkation als auch das nichtmetallische Kation haben eine antimikrobielle Funktion; zusammen verleihen sie dem erfindungsgemäßen antimikrobiellen Material die Fähigkeit, Mikroorganismen abzutöten.

Gegenstand der vorliegenden Erfindung ist somit
(1) ein antimikrobielles Material, im Wesentlichen bestehend aus einem Trägerpolymer, an welches metallische und nichtmetallische Kationen gebunden sind, wobei das Trägerpolymer ein Copolymer ist, welches aus mindestens drei Monomerarten besteht, wobei das erste Monomer ein Acrylnitril oder ein Acrylnitril-Derivat ist, das zweite Monomer ein Acrylsäureester oder ein Acrylsäureester-Derivat ist und das dritte Monomer ein Ethylen-Derivat ist, das einen aromatischen Rest enthält, der wenigstens eine Säuregruppe trägt;
(2) das antimikrobielle Material gemäß (1), wobei
   (i) das Verhältnis von Monomereinheiten im Copolymer 90 bis 96 Gew.-% erstes Monomer, 4 bis 8 Gew.-% zweites Monomer, 0,01 bis 1 Gew.-% drittes Monomer ist,
   (ii) das erste Monomer Acrylnitril ist, das zweite Monomer Methylacrylat ist und das dritte Monomer Natriumstyrylsulfonat (SSS) ist; und
   (iii) die Metallionen an die Cyanogruppen der ersten Monomereinheiten des Copolymers gebunden sind und die nichtmetallischen Kationen an die Säuregruppen der dritten Monomereinheit des Copolymers gebunden sind;
(3) das antimikrobielle Material gemäß (1) oder (2), das ein Mikropartikel, eine Faser, oder ein daraus hergestelltes Produkt ist, wobei das Produkt bevorzugt ein Garn, Gewebe (aus Fasern gewebter Stoff) oder ein nicht gewebtes Material ("nonwoven") wie Vlies oder Filz ist;
(4) ein Verfahren zur Herstellung des antimikrobiellen Materials gemäß (1) bis (3), das die Verknüpfung von Metallionen und Nichtmetallionen mit dem Trägerpolymer wie in (1) definiert umfasst;
(5) ein Verfahren zur Herstellung antimikrobieller textiler Fertigprodukte enthaltend das antimikrobielle Material gemäß (1) bis (3), wobei das Trägerpolymer im Verfahren als Mikropartikel, Faser, Vliesstoff, Garn oder Gewebe eingesetzt wird;
(6) die Verwendung des antimikrobiellen Materials gemäß (1) bis (3) zur Herstellung von textilen und nichttextilen Produkten mit antimikrobiellen Eigenschaften;
(7) ein textiles oder nichttextiles Produkt mit antimikrobiellen Eigenschaften, enthaltend das antimikrobielle Material gemäß einer oder mehreren der Ausführungsformen (1) bis (3);
(8) eine pharmazeutische, veterinärmedizinische oder kosmetische antimikrobielle Zusammensetzung, welche das antimikrobielle Material gemäß (1) bis (3) enthält;
(9) Verwendung des antimikrobiellen Materials gemäß (1) bis (3) zur Reduktion oder Vorbeugung der Ansiedlung oder Ausbreitung von Mikroorganismen, bevorzugt von pathogenen Pilzen, Bakterien und/oder Schimmel.

### Kurzbeschreibung der Abbildungen

### Fia. 1-15: Graphiken zu Bsp. 3

### Verwendete Definitionen

Im Folgenden werden zunächst einige der verwendeten Begriffe definiert und erläutert.

"Verknüpft" und "gebunden" werden im Zusammenhang mit der Wechselwirkung zwischen dem erfindungsgemäßen Trägerpolymer und den metallischen und nichtmetallischen Ionen synonym verwendet. Diese Begriffe bezeichnen jede Art der chemischen Wechselwirkung, sei sie kovalent, ionisch, nichtionisch oder hydrophob, welche zu einem Zusammenhalt zwischen dem Trägerpolymer und den metallischen bzw. nichtmetallischen Ionen führt. Die "Verknüpfung" metallischer Ionen mit dem Trägerpolymer kommt insbesondere dadurch zustande, dass die Nitrilgruppen des ersten Trägerpolymer-Monomers die Metallionen komplexieren, wodurch letztere an das Trägerpolymer "gebunden" werden. Entsprechend bedeutet "Verknüpfung" der nichtmetallischen Kationen mit dem Trägerpolymer, dass die Säuregruppen des dritten Trägerpolymer-Monomers mit den nichtmetallischen Kationen ionische Wechselwirkungen eingehen oder kovalente Bindungen zwischen den nichtmetallischen Kationen und den Säuregruppen gebildet werden. Dies führt zur "Bindung" der nichtmetallischen Kationen an das Trägerpolymer. Im Gegensatz dazu bedeutet die Bindung der Kationen an das Trägerpolymer ausdrücklich nicht, dass Salze der metallischen oder nichtmetallischen Kationen mit einer weiteren niedermolekularen, nicht polymeren organischen oder anorganischen Verbindung lediglich in eine Matrix aus Trägermaterial eingebettet werden, so dass die Bindung der Kationen nur durch physikalische Effekte erzielt wird (Einschluss der Kationen in die Matrix).

"Im Wesentlichen bestehend aus" bedeutet gemäß der Erfindung einen Gehalt von mehr als 90 Gew.-%, vorzugsweise mehr als 95 Gew.-% und am meisten bevorzugt mehr als 99 Gew.-%. Ganz besonders bevorzugt bedeutet "im Wesentlichen bestehend aus" dasselbe wie "bestehend aus", also dass neben dem genannten Bestandteil/neben den genannten Bestandteilen keine weiteren Bestandteile im Material vorhanden sind.

"Enthalten" schließt, soweit nicht anders angegeben, im Kontext der vorliegenden Anmeldung "im Wesentlichen bestehend aus" und "bestehend aus" mit ein.

Ein "Polyacrylnitril" (PAN) im Sinne der vorliegenden Anmeldung ist ein organisches Polymer, welches teilweise oder zur Gänze aus Acrylnitril-Monomeren zusammengesetzt ist. Polyacrylnitril kann neben Acrylnitril auch andere Monomere enthalten, z.B. substituierte Ethylene und Acrylsäuren oder Acrylsäureester. So besteht ein ternäres PAN gemäß der vorliegenden Erfindung aus drei verschiedenen Monomeren, von denen eines Acrylnitril ist.

"Antimikrobiell" ist das erfindungsgemäße Material, weil es Mikroorganismen wie Bakterien, pathogene Pilze, Hefen und Protozoen zerstört oder am Wachstum hindert. Diese antimikrobielle Wirkung kann sich äußern in einer bakteriolytischen, bakteriziden, fungiziden und/oder einer bakteriostatischen oder fungistatischen (d.h. wachstumsverhindernden) Wirkung.

Ein "Derivat" ist im Kontext der vorliegenden Erfindung eine Verbindung, welche sich aus einer Grundstruktur dadurch herleitet, dass ein oder mehrere Wasserstoffatome in dieser Grundstruktur durch eine Atomgruppe ersetzt wurde. Das Derivat wird aber weiterhin durch die ursprünglich vorhandenen funktionellen Gruppen charakterisiert. So ist z.B. ein Acrylnitril-Derivat ein Acrylnitril-Molekül, das einen oder mehrere Substituenten besitzt, wie z.B. Methacrylnitril. Ein StyrolDerivat ist ein Styrol, das am Benzolring und/oder am Ethylenrest einen oder mehrer Substituenten besitzt. Eines dieser Styrolderivate ist eine Styrol, welches mindestens eine Säuregruppe (bevorzugt eine Sulfonsäure- oder Carbonsäuregruppe) am Benzolring trägt.

"Metallische Ionen" wird im Kontext der vorliegenden Erfindung synonym zu "Metallkationen" verwendet.

"Textilien" sind Materialien, die aus verspinnbaren Fasern hergestellt sind. Je nach Fertigungsgrad werden sie unterteilt in Halbfabrikate wie Garne und Zwirne, und Fertigfabrikate wie Gewirke/Wirkwaren (auf Raschelmaschinen oder Kettstühlen hergestellt, z.B. Gardinen), Gestricke/Strickwaren, Gewebe/Webwaren, Teppiche, technische Textilien (z.B. Geotextilien), Geflechte, Samt, Plüsch, Frottee, Polgewebe, Häkelware, Spitze, Tuch und textile Fertigwaren (z.B. Kleidung). Charakteristisch für Textilien ist, dass sie aus Fasern bestehen und meist in zwei Dimensionen sehr viel ausgedehnter sind als in einer dritten Dimension (sie sind also meist flach und dünn). Textilien können durchaus eine gewisse Dicke aufweisen, wie dies bei textilen Fertigwaren einschließlich Teppichen, Samt, Plüsch, Frottee, Vliesstoffen oder Filz der Fall ist.

Textilien werden nach ihrer Bestimmung in Kleidung, "Heimtextilien" (Textilien für die Wohnung) und "technische Textilien" (Textilien für industrielle Zwecke) eingeteilt.

Grundlegendes Verfahren zur Herstellung von Garn ist das Spinnen. Bei der Herstellung textiler Fertigwaren dominieren die Verfahren Weben, Stricken, Verfestigen zu Vliesstoff oder Filz und Wirken.

Ein "Vlies" bzw. "Vliesstoff" ist ein textiles Flächengebilde aus einzelnen Fasern. Im Gegensatz dazu werden Gewebe, Gestricke und Gewirke aus Garnen hergestellt und Membranen aus Folien. In der gültigen Norm DIN EN 29092 (ISO 9092) wird Filz zwar nicht zu den Vliesen gezählt. Im Kontext der vorliegenden Anmeldung sollen jedoch auch Filze vom Begriff "Vlies" bzw. "Nonwovens" erfasst werden, wenn nicht ausdrücklich ein anderes gilt. Ein Vlies im engeren Sinne besteht aus lose zusammenliegenden Fasern, welche noch nicht miteinander verbunden sind. Die Festigkeit eines Vlieses beruht nur auf der fasereigenen Haftung. Damit man das Vlies verarbeiten und benutzen kann, muss es verfestigt werden, wofür verschiedene Methoden angewandt werden können. Erst ein verfestigtes Vlies ist eigentlich als Vliesstoff zu bezeichnen. Im folgenden soll jedoch der Begriff "Vlies" sowohl loses Vlies als auch Vliesstoff bedeuten. Die Vliesherstellung erfolg durch mechanische (Vernadelung oder Wasserstrahlverfestigung), chemische (Zugabe von Bindemitteln) oder thermische (Thermobonding) Verfestigung von Faservliesen (Einzelheiten vgl. Albrecht, W. et al., Vliesstoffe, Wiley-VCH-Verlag, ISBN 3-527-29535-6 (2000)).

Ein "Garn" ist ein langes, dünnes Gebilde aus mehreren Fasern. Es ist ein textiles Zwischenprodukt, welches zu Geweben, Gestricken und Gewirken verarbeitet werden kann oder auch zum Nähen verwendet wird. Garn wird direkt durch Nass- oder Trocken-Spinnen hergestellt oder nach dem Spinnen noch gezwirnt. Bevorzugtes Garn im Kontext der vorliegenden Anmeldung ist ein Stapelfasergarn.

### Detaillierte Beschreibung der Erfindung

Das erfindungsgemäße Material gemäß Ausführungsform (1) bis (3) hat eine langfristige antimikrobielle und schimmelbeständige Breitbandwirkung. Es hat ein breites Wirkungsspektrum auf verschiedene Mikroorganismen. Diese antimikrobielle Wirkung wird erreicht durch die Synergie der metallischen mit den nichtmetallischen Ionen, welche an das Trägermaterial gebunden sind. Das Material kann verwendet werden, um antimikrobielle und schimmelbeständige Kunststoffe, Keramiken, Gebäudebeschichtungen, Gummiteile usw. herzustellen, aber seine bevorzugte Verwendung ist die Verwendung in Textilien. Das Material ist nichttoxisch, umweltfreundlich, leicht herzustellen und leicht zu handhaben.

Das Material gemäß Ausführungsform (1) bis (3) besteht aus einem Trägerpolymer und daran gebundenen Kationen, welche die typischen Eigenschaften des Trägerpolymers jedoch nicht verändern. Die Zusammensetzung des Polymers gewährleistet eine stabile Verankerung der Ionen am Trägerpolymer, was die hohe Waschfestigkeit und Diffusionsbeständigkeit des erfindungsgemäßen Materials zur Folge hat (vgl. Bsp. 3 und Bsp. 8).

In einem bevorzugten Aspekt der vorliegenden Erfindung hat die erste Monomereinheit ("erstes Monomer") des Trägerpolymers die Formel 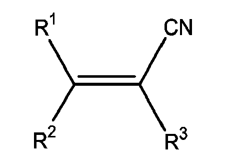 wobei R¹, R² und R³ unabhängig voneinander Wasserstoff, eine C₁₋₅-Alkylgruppe oder eine halogenierte C ₁₋₅-Alkylgruppe sind, und wobei R² und R³ zusammen mit der Doppelbindung einen 5-, 6- oder 7-gliedrigen Ring oder einen Polyzyklus bilden. Vorzugsweise ist R¹ Wasserstoff oder eine C₁₋₃-Alkylgruppe und R² und R³ sind Wasserstoff, am meisten bevorzugt sind R¹, R² und R³ Wasserstoff. Das obige Monomer kann E- oder Z-Konfiguration besitzen. Am meisten bevorzugt handelt es sich bei dem ersten Monomer um Acrylnitril.

In einem zweiten bevorzugten Aspekt ist die zweite Monomereinheit ("zweites Monomer") ein C₁₋₅-Alkylester einer Säure ausgewählt aus der Gruppe umfassend Acrylsäure, Methacrylsäure und Crotonsäure. Vorzugsweise handelt es sich um Methyl- oder Ethylacrylat, besonders bevorzugt um Methylacrylat.

In einem dritten bevorzugten Aspekt hat das dritte Monomer die Formel 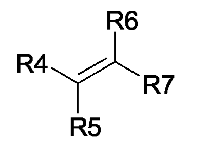 wobei
R⁴ = -Aryl-(CHR⁸)ₙ-CO₂H oder -Aryl-C(CHR⁸)ₙSO₃H ist (wobei der Arylrest aromatisch oder heteroaromatisch und bevorzugt ein Monozyklus, besonders bevorzugt ein aromatischer Fünf- oder Sechsring ist, und wobei dieser Arylrest weiterhin mit einem oder mehreren Resten R⁸ substituiert sein kann; wobei R⁸ Wasserstoff, eine C₁₋₅-Alkylgruppe oder eine halogenierte C₁₋₅-Alkylgruppe und vorzugsweise Wasserstoff ist, und n eine ganze Zahl von 0 bis 5, vorzugsweise 0 oder 1, ist),
R⁵ CO₂H, CO₂R⁶, eine C₁₋₅-Alkylgruppe, eine halogenierte C₁₋₅-Alkylgruppe oder Wasserstoff ist,
R⁶ und R⁷ unabhängig voneinander Wasserstoff, eine C₁₋₅-Alkylgruppe oder eine halogenierte C₁₋₅-Alkylgruppe sind, oder R⁵ und R⁷, zusammen mit der Doppelbindung, einen 5-, 6- oder 7-gliedrigen Ring oder einen Polyzyklus bedeuten können,
besonders bevorzugt R⁵ Wasserstoff oder CO₂ ist und R⁶ und R⁷ Wasserstoff sind; die Konfiguration E oder Z ist; und es sich entweder um eine freie Säure oder ein entsprechendes Salz handelt.

In einem besonders bevorzugten Aspekt ist das dritte Monomer ein Styrolderivat mit wenigstens einer Säuregruppe, und vorzugsweise hat dieses Styrolderivat in Form der freien Säure die Formel 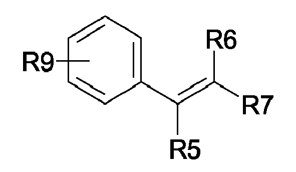 wobei R⁹ = -(CHR⁸)ₙ-CO₂H oder -C(CHR⁸)ₙSO₃H ist (wobei R⁸ Wasserstoff, eine C₁₋₅-Alkylgruppe oder eine halogenierte C₁₋₅-Alkylgruppe und vorzugsweise Wasserstoff ist, und n eine ganze Zahl von 0 bis 5, vorzugsweise 0 oder 1, ist), besonders bevorzugt R⁹ = -SO₃H, -CO₂H, -CH₂SO₃H oder -CH₂CO₂H ist, R⁵ Wasserstoff oder CO₂H ist und R⁶, R⁷ und R⁸ Wasserstoff sind; R⁹ sich in o-, m- oder p-Position, vorzugsweise in p-Position, befindet; die Konfiguration E oder Z ist; und es sich entweder um eine freie Säure oder ein entsprechendes Salz handelt.

In diesen Aspekten umfasst der Ausdruck " C₁₋₅-Alkylgruppe" Methyl-, Ethyl-, n-Propyl-, Isopropylgruppen, Butyl, n-Butyl, iso-Butyl und Amyl (n-, 2-, 3-, tert-, oder neo-Amyl). "Halogenierte C₁₋₅-Alkylgruppen" sind C₁₋₅-Alkylgruppen, bei denen 1 oder mehrere (gegebenenfalls alle) Wasserstoffatome durch Halogenatome, wie Fluor, Chlor, Brom oder Iod, substituiert sind. Bevorzugt sind hiervon (halogienierte) C₁₋₃-Alkylgruppen.

Besonders bevorzugt ist eine Ausführungsform von (1), in welcher diese drei bevorzugten Aspekte gleichzeitig erfüllt sind, das Trägerpolymer also aus den unter dem ersten bis dritten Aspekt definierten Monomeren besteht. Ganz besonders bevorzugt besteht das Trägerpolymer aus den drei Monomeren Acrylnitril, Methylacrylat und Natriumstyrylsulfonat.

In dem Material der Ausführungsform (1) bis (3) ist außerdem bevorzugt, dass das Verhältnis der Monomereinheiten im Copolymer etwa 90 bis etwa 96 Gew.-% erstes Monomer, etwa 4 bis etwa 8 Gew.-% zweites Monomer, etwa 0,01 bis etwa 1 Gew.-% drittes Monomer beträgt. Besonders bevorzugt ist eine Zusammensetzung mit etwa 93 bis etwa 94 Gew.-% erstem Monomer, etwa 6-7 Gew.-% zweitem Monomer und mehr als 0 Gew.-%, aber weniger als 1 Gew.-% drittem Monomer. Am meisten bevorzugt ist als Trägermaterial in Ausführungsform (1) bis (3) ein ternäres PAN aus etwa 93 Gew.-% Acrylnitril, etwa 6 Gew.-% Methacrylat und mehr als 0 aber weniger als 1 Gew.-% Natriumstyrylsulfonat.

Das Copolymer kann ein statistisches oder Blockpolymer oder ein Gemisch dieser beiden Polymerarten sein. Handelt es sich bei dem Copolymer um ein Blockpolymer, so ist ein Blockpolymer vom AB-Typ oder vom ABA-Typ bevorzugt, in welchem der A-Block aus dem ersten Monomer besteht und der B-Block ein statistisches Copolymer ist, das aus dem zweiten und dem dritten Monomer besteht.

In einem bevorzugten Aspekt des erfindungsgemäßen antimikrobiellen Materials sind die metallische Kationen Kationen der Silbergruppe, insbesondere Silber-, Kupfer- und/oder Zinkionen in verschiedenen Wertigkeitsstufen. Die nichtmetallischen Kationen sind bevorzugt nichtmetallische Kationen mit antimikrobieller Eigenschaft, besonders bevorzugt stickstoffhaltige Kationen mit antimikrobieller Eigenschaft, besonders bevorzugt Kationen mit einem tertiären oder quartären Stickstoffatom, insbesondere kationische Farbstoffe. Sowohl die metallischen als auch die nichtmetallischen Kationen im erfindungsgemäßen Material können entweder nur aus einer Art Kationen zusammengesetzt sein oder Mischungen verschiedener metallischer bzw. nichtmetallischer Kationen sein. Das Material enthält jedoch mindestens eine Art metallischer und eine Art nichtmetallischer Kationen, bevorzugt nur eine Art metallischer und eine Art nichtmetallischer Kationen.

Die Metallionen sind bevorzugt Ionen von Silber (Ag⁺), Kupfer (Cu⁺, Cu²⁺) und/und Zink (Zn²⁺). Besonders bevorzugt handelt es sich um Cu⁺, Cu²⁺ und/oder Zn²⁺. Ganz besonders bevorzugt sind Cu⁺ und Cu²⁺-Ionen.

Die nichtmetallischen Kationen mit antimikrobieller Eigenschaft sind vorzugsweise stickstoffhaltige Verbindungen mit wenigstens einer positiven Ladung. Es kann sich dabei um irgendeine antimikrobielle aliphatische oder aromatische Amin- oder Ammoniumverbindung handeln. Zu diesen Kationen zählen gesättigte oder ungesättigte Heterozyklen, die entweder protoniert sind oder von vorneherein wenigstens eine positive Ladung aufweisen. Sie enthalten wenigstens ein Stickstoffatom und sind ausgewählt aus der Gruppe umfassend gesättigte Heterozyklen (wie Pyrrolidin, Imidazolidin, Piperidin, Piperazin, Azepan, Azepin, Morpholin, DABCO (1,4-Diazabizyklo[2.2.2]octan) etc.) und ihre Derivate (wie N-Methylmorpholin usw.), ungesättigte Heterozyklen mit wenigstens einer Doppelbindung und Heteroaromaten (wie DBN (1,5-Diazabizyklo[4.3.0]non-5-en), DBU (1,8-Diazabizyklo[5.4.0]undec-7-en), Imidazol, Triazol, Pyridin, Bipyridin, Pyrazin, Pyrimidin, Triazin, Tetrazin etc.) und ihre Derivate (wie substituierte Heterozyklen (z.B. Lutidin, Collidin etc.) oder aminosubstituierte Heterozyklen (z.B. DMAP (4-N,N-Dimethylaminopyridin) etc.), benzokondensierte Heteroaromaten (wie Chinolin, Isochinolin, Acridin, Phenazin etc.) und ihre Derivate, Ammoniumverbindungen, nämlich Mono-, Di-, Trialkyl- (oder -aryl)amine (in protonierter Form) (wie Butylamin, Dibutylamin, Trimethylamin, Triethylamin, Tripropylamin, Tributylamin, N,N-Diisopropylethylamin, Benzyl-N,N-diethylamin, Benzyl-N,N-dipropylamin, Benzyl-N,N-dibutylamin etc.), Tetraalkyl-(oder -aryl)-ammonium (wie Tetraethylammonium, Tetrapropyl-ammonium, Tetrabutylammonium, Benzyl-N,N,N-triethylammonium, Benzyl-N,N,N-tripropylammonium, Benzyl-N,N,N-tributylammonium, Dibenzyl-N,N-diethylammonium etc.) und ihre Derivate, kationische Farbstoffe, einschließlich Basic Green und kationisches Brillantblau, Methin-Farbstoffe, Enamin-Farbstoffe, Styryl-Farbstoffe, Cyanin-Farbstoffe, Mono- und Diazadimethin-Farbstoffe, Diazo-Farbstoffe, Diphenylmethan- und Triphenylmethan-Farbstoffe, Xanthen-Farbstoffe, Azin-Farbstoffe, Azo-Farbstoffe, Anthrachinon-Farbstoffe, Phthalocyanin-Farbstoffe, Perinon-Farbstoffe, Naphthalimid-Farbstoffe, Chinophthalon-Farbstoffe, Neutrocyanin-Farbstoffe, Nitro-Farbstoffe etc.

Besonders bevorzugte nichtmetallische Kationen sind die genannten kationischen Farbstoffe, insbesondere Methin-Farbstoffe, Diazo-Farbstoffe und Triphenylmethan-Farbstoffe, von denen Basic-Green-Farbstoffe einschließlich Basic Green 1 [N,N-Diethyl-4-[p-(diethylamino)-diphenylmethylen]-2,5-cyclohexadienylidenammoniumhydrogensulfat] (Brilliant Grün, Malachitgrün G; CAS Nr. 633-03-4), Basic Green 4 [N,N-Dimethyl-4-[p-(dimethylamino)-diphenylmethylen]-2,5-cyclohexadienylidenammoniumchlorid] (Malachitgrün IV; CAS Nr. 2437298) und kationisches Brillantblau am meisten bevorzugt sind. Besonders bevorzugt ist Basic Green 4 (Malachitgrün IV).

Damit das erfindungsgemäße Material antimikrobielle Eigenschaften hat und schimmelbeständig ist, ist es wesentlich, dass sein Gehalt an nichtmetallischem Kation nicht zu gering ist, d.h. dass das nichtmetallische Kation nicht nur in Spuren vorhanden ist. Letzteres wäre z.B. der Fall bei Verunreinigungen aus der Trägerpolymerherstellung. Erfindungsgemäß ist das nichtmetallische Kation dann nur in Spuren vorhanden, wenn sein Gehalt im erfindungsgemäßen Material kleiner als 0,01 Gew.-% ist. Mit anderen Worten: im erfindungsgemäßen Material muss der Gehalt an nichtmetallischen Kationen größer oder gleich 0,01 Gew.-% sein. Darüber hinaus muss das Gewichtsprozentverhältnis von nichtmetallischen Kationen zu Metallionen bevorzugt mindestens etwa 1,0 : 20,0 betragen (d.h. der Gehalt an nichtmetallischen Kationen beträgt mindestens etwa 5 Gew.-% des Gehalts an Metallionen), um eine hohe antimikrobielle Wirkung zu gewährleisten (vgl. Bsp. 6). Besonders bevorzugt ist ein Verhältnis von mindestens etwa 1 : 5, ganz besonders bevorzugt von mindestens etwa 1 : 3.

Daher ist der Gehalt an nichtmetallischen Kationen im erfindungsgemäßen Material bevorzugt wie folgt definiert: Die nichtmetallischen Kationen sind in dem Material der vorliegenden Erfindung in einem Gewichtsprozentverhältnis von nichtmetallischen Kationen zu Metallkationen vorhanden, das nicht kleiner ist als etwa 1,0:20,0, und/oder der Gehalt an nichtmetallischen Kationen ist nicht kleiner als etwa 5 Gew.-% des Gehalts an Metallionen.

Bevorzugt sind folgende Kationenmengen im erfindungsgemäßen Produkt enthalten:
Nichtmetallkation: von etwa 0,03 bis etwa 10 Gew.-% (auf 100 Gew-% Material), bevorzugt von etwa 0,1 bis etwa 2 Gew.%, besonders bevorzugt von etwa 0,2 bis etwa 1 Gew.-%.
Metallkation: von etwa 0,01 bis etwa 5 Gew.-%, bevorzugt von etwa 0,1 bis etwa 2,5 Gew.-%, besonders bevorzugt von etwa 0,6 bis etwa 2 Gew.-%.

Das erfindungsgemäße Material kann bis zu etwa 5 Gew.-%, vorzugsweise bis zu etwa 3 Gew.-%, Wasser enthalten. Der Rest des Materials besteht vorzugsweise ausschließlich aus dem Trägerpolymer und den Kationen.

Das Material der Ausführungsformen (1) bis (3) ist ein Feststoff. Ein solcher Feststoff kann ein Partikel (wie Mikro- oder Nanopartikel), eine Faser oder ein flächiges oder dreidimensionales Gebilde (wie Flocken, Folien oder Textilien) sein. Das erfindungsgemäße Material ist farbecht und hat eine hohe, dauerhafte antimikrobielle Wirksamkeit gegen Bakterien, Hefen und Pilze. Es ist bakterizid und fungizid sowie bakteriostatisch und fungistatisch.

Eine gemäß Ausführungsform (3) bevorzugte feste Form des Materials sind Mikropartikel. Mikropartikel haben eine Größe von bis zu 2 mm, bevorzugt bis zu 1 mm und können eine Größe bis herab zu 1 µm Durchmesser haben. Die bevorzugte Partikelgröße im Kontext der vorliegenden Erfindung ist etwa 20 bis etwa 2000 µm (635 bis 10 mesh), vorzugsweise 32 bis 300 µm (450 bis 50 mesh), besonders bevorzugt 32 bis 75 µm (450 bis 200 mesh) Teilchendurchmesser. Die Mikropartikel können porös oder massiv sein.

Eine weitere bevorzugte feste Form des Materials der Ausführungsform (1) bis (3) ist eine Faser oder ein Material aus einer solchen Faser, also eine Textilie wie oben definiert. Aus der Faser wird bevorzugt zunächst ein Garn oder ein Vlies hergestellt. Diese werden dann zu textilen Produkten weiterverarbeitet. Die Faser kann massiv oder eine Hohlfaser sein, ist jedoch bevorzugt massiv.

Eine besonders bevorzugte Textilie der Ausführungsform (3) ist ein Vlies, insbesondere ein Faservlies oder Nadelfilz. Dies daher, weil ein antimikrobielles Vlies gemäß der vorliegenden Erfindung in all jenen Anwendungsgebieten einsetzbar ist, die oben für "nonwovens" beschrieben werden; und weil es die oben beschriebenen Vorteile eines Vlieses besitzt, also kostengünstig und in wenigen Verfahrensschritten herstellbar ist.

Ein erfindungsgemäßes Vlies kann entweder direkt aus einem PAN-Vlies mit der Herstellungsmethode gemäß Ausführungsform (4) oder mit jeder bekannten Methode zur Vliesherstellung aus der erfindungsgemäßen Faser hergestellt werden. Im letzteren Fall, der einen Aspekt der Ausführungsform (7) darstellt, ist der Anteil der erfindungsgemäßen antimikrobiellen Fasern an der Gesamtfasermenge im Vlies bzw. Filz von den Anforderungen an das Material abhängig. Er beträgt in der Regel von etwa 1 bis 100 Gew.-%, bevorzugt von 1 bis 99 Gew.-%, besonders bevorzugt von etwa 10 bis etwa 60 Gew.-%, ganz besonders bevorzugt von etwa 25 bis etwa 50 Gew.-%. Bevorzugte Vlies-Herstellungsmethoden sind das Thermobonding (Heisspressen) und das Nadelfilzverfahren. Beim Thermobonding wird mittels einer Krempel ein loses Faservlies bestehend aus synthetischen Fasern erzeugt. Dieses Faservlies wird zur Thermokohäsion durch Kalander geführt. Beim Nadelfilzverfahren wird mit Hilfe der sogenannten Nadelmaschine durch mechanische Verflechtung von Einzelfasern ein Filz hergestellt.

Die Faser gemäß Ausführungsform (3) ist bevorzugt eine Stapelfaser und bevorzugt etwa 2,5 bis etwa 10 cm lang, ganz besonders bevorzugt 4 bis 5 cm lang. Bevorzugte Dicke ist von 1,0 bis 6,67 dtex, besonders bevorzugt 1,67 dtex, 3,33 dtex und 6,67 dtex, ganz besonders bevorzugt 1,67 dtex, jedoch kann auch jede andere Faserdicke verwendet werden.

Die erfindungsgemäße Faser ist eine Faser für textile Anwendungen, textile Halbund Fertigfabrikate (z.B. Garne, Gewebe, Gewirke, Gestricke, Vliese, Filze) und textile Fertigwaren (z.B. Kleidung).

Das Material gemäß Ausführungsform (1) bis (3) besitzt gegenüber anderen antimikrobiellen Produkten diverse Vorteile. So zeigen bekannte antimikrobiell modifizierte Synthese-Fasern mit flüchtigen Wirkstoffen in Depots der Faser nur eine geringe und zeitlich begrenzte Wirkung (Girrbach, U., Antimikrobielle Textilien auf dem Weltmarkt, Vortrag auf: 2. Europäische Konferenz über Textilien und die Haut, Stuttgart, Veranstalter: Hohenstein Institutes, Boennigheim, Nr. 3 des Konferenzhandbuchs (2004)). Die nachträgliche oberflächliche antimikrobielle Ausrüstung von Textilien ist ebenfalls entweder auswaschbar (Girrbach, U., aao) oder in der Wirksamkeitsdauer begrenzt (Ausrüstung mit Chlorchemikalien, die durch die Gasphase wirken).

Ein erfindungsgemäßes Garn kann durch Behandlung eines vorgefertigten Garns nach dem erfindungsgemäßen Verfahren hergestellt werden, wird jedoch bevorzugt in einem weiteren Aspekt der Ausführungsform (7) aus der erfindungsgemäßen Faser oder durch Beschichten eines Gewebes, mit den erfindungsgemäßen Mikropartikeln hergestellt. Besonders bevorzugt ist, dass es die erfindungsgemäße Faser enthält. Es enthält je nach Anwendungsgebiet und geforderten Materialeigenschaften unterschiedlichen Mengen des erfindungsgemäßen Materials, bevorzugt mindestens 1 Gew.-%, besonders bevorzugt von 1 Gew.-% bis 99 Gew.-%, ganz besonders bevorzugt von etwa 10 bis etwa 60 Gew.-%, und vor allem ganz besonders bevorzugt von etwa 25 Gew.-% bis etwa 50 Gew.-%. Da die erfindungsgemäße Faser bevorzugt eine Stapelfaser ist, ist auch das bevorzugte Garn ein Stapelgarn. Es wird im Spinnverfahren durch Zusammendrehen der Einzelfasern hergestellt.

Alle Materialien der Ausführungsform (1) bis (3) und die daraus hergestellten Produkte sind bevorzugt waschfest, besitzen also eine antimikrobielle Wirkung, welche auch nach ein- oder mehrmaligem Waschen vorhanden ist (vgl. Bsp. 3). Besonders bevorzugt ist, dass diese Waschfestigkeit über die gesamte Lebensdauer der Materials bzw. Produkts besteht. Dies gilt insbesondere für die Faser der Ausführungsform (3) sowie für Textilien, welche das erfindungsgemäße Material enthalten, vor allem für Garn und daraus hergestellte Textilien, Vlies und Filz.

Das Verfahren gemäß Ausführungsform (4) zur Herstellung des erfindungsgemäßen Materials gemäß (1) bis (3) umfasst zumindest die folgenden Schritte: (a) die Bindung von Ionen aus der Silbergruppe an das Trägerpolymer, und (b) die Bindung von organischen stickstoffhaltigen Kationen an das Trägerpolymer. Diese beiden Schritte können entweder gleichzeitig oder hintereinander durchgeführt werden, wobei eine sequentielle Durchführung, in welcher die Verknüpfung der Metallionen mit dem Trägerpolymer vor der Verknüpfung der nichtmetallischen Kationen mit dem daraus resultierende Material stattfindet, bevorzugt ist.

Eine bevorzugte Ausführungsform des Verfahrens gemäß Ausführungsform (4) umfasst die folgenden Schritte:
(a) Inkubation des Trägerpolymers mit einer wässrigen Lösung der Silbergruppen-Metallkationen, bevorzugt mit einer Kupfersalzlösung, bei einer Temperatur von mindestens etwa 50 °C, bevorzugt mindestens etwa 60 °C, besonders bevorzugt mindestens etwa 70 °C, für mindestens etwa 20 min, unter ständigem Rühren;
(b) Zugabe eines Reduktionsmittels und mindestens etwa 20 min, bevorzugt mindestens etwa 30 min Inkubation des Gemisches unter ständigem Rühren bei 60 bis 90 °C, bevorzugt bei 70 °C;
(c) Zugabe eines kationischen Farbstoffs zum Gemisch und Rühren des Gemischs für mindestens 20 min bei mindestens 80 °C, bevorzugt bei mindestens 90 °C, besonders bevorzugt bei mindestens 95 °C;
(d) Erhitzen des Gemisches für mindestens 20 min bei mindestens 80 °C, bevorzugt mindestens 95 °C unter ständigem Rühren;
(e) Isolieren des Produkts durch Filtrieren des Gemischs oder andere Methoden zur mechanischen Abtrennung (Abgiessen Überstand, Entnahme der Faserbündel o.ä.); und
(f) Waschen und Trocknen des Produkts.

Das Trägerpolymer wird als Feststoff eingesetzt und weiterverarbeitet, bevorzugt als Mikropartikel, Vliesstoff, Faser, Garn oder Gewebe. Besonders bevorzugt ist der Einsatz als Mikropartikel oder Faser.

In einem bevorzugten Aspekt ist das Gemisch am Ende von Schritt (d), besonders bevorzugt bereits am Ende von Schritt (c) trocken.

In keinem Schritt darf die Temperatur 150 °C erreichen, da bei dieser Temperatur Zersetzung des PAN beginnt. Bevorzugt liegt die Temperatur in allen Schritten bei maximal etwa 130 °C, besonders bevorzugt bei maximal etwa 100 °C. Lediglich in Schritt (c) und (d) liegt die besonders bevorzugte maximale Temperatur bei etwa 110 °C.

Die Inkubationszeiten bzw. Rührzeiten richten sich nach dem eingesetzten Material und nach der verwendeten Temperatur. Je höher die Temperatur, desto niedriger kann die Inkubationszeit gewählt werden. Die Inkubationszeiten betragen bevorzugt mindestens etwa 30 min, besonders bevorzugt mindestens etwa 50 min. Bei Fasern und verstärkt bei Garnen, Geweben und Vliesen als Ausgangsmaterial sind diese Zeiten wegen der langsameren Durchdringung des Materials mit den Lösungen und wegen der langsamere Erwärmung des Materials höher und können auch mindestens etwa 1 h, bevorzugt mindestens etwa 1,5 h betragen. Daher sind Mikropartikel und Fasern, insbesondere Stapelfasern, sowie deren Herstellung bevorzugte Aspekte der vorliegenden Anmeldung. Aus den Partikeln und Fasern können dann die anderen erfindungsgemäßen Produkte wie Garne, Textilien etc. hergestellt werden.

Die Rührgeschwindigkeiten sind vom eingesetzten Material abhängig, da Mikropartikel eine andere Geschwindigkeit erlauben als Fasern oder Textilien wie Garne, Gewebe oder Vliese. Die Geschwindigkeit beträgt bevorzugt mindestens 5 rpm und maximal 100 rpm, besonders bevorzugt 20 bis 40 rpm für Mikropartikel, und besonders bevorzugt 10 bis 30 rpm für Fasern. Die Rührgeschwindigkeit bei Garnen, Geweben oder Vliesen sollte entsprechend niedriger gewählt sein, um eine Schädigung des eingesetzten Trägers zu vermeiden.

Alternativ können Garne, Gewebe oder Vliese auch getaucht werden, also nicht in direktem Kontakt zum Rührwerk stehen.

Alle Verfahrenschritte können in einem Aspekt der Ausführungsform (4) bei einem Druck durchgeführt werden, der über oder unter Normaldruck liegt. Der Einfluss dieser Variation auf die Rührzeiten und die notwendige Reaktionstemperatur lässt sich durch Routineversuche ermitteln. Bevorzugt ist aber für die Schritte (a) bis (e) die Arbeit bei Normaldruck. Dagegen kann das Filtrieren vorteilhaft unter Beaufschlagung des Filters mit Druck oder unter Anlegen eines leichten Vakuums unter dem Filter beschleunigt werden.

Die Wahl des Filters richtet sich bei der Herstellung von Mikropartikeln nach deren Größe, bevorzugte Filter sind folglich Filter für Teilchendurchmesser von 500 bis 10 mesh oder 30 bis 1480 µm Teilchendurchmesser, vorzugsweise 200 bis 50 mesh oder 74 bis 297 µm Durchmesser.

Werden Fasern hergestellt, so sind Stapelfasern bevorzugt, besonders bevorzugt Fasern mit etwa 2,5 bis etwa 10 cm Länge, ganz besonders bevorzugt mit 4 bis 5 cm Länge. Bevorzugte Dicke ist von 1,0 bis 6,67 dtex, besonders bevorzugt sind 1,67 dtex, 3,33 dtex und 6,67 dtex, ganz besonders bevorzugt ist eine Dicken von 1,67 dtex. Sie werden in Schritt (e) nicht filtriert, sondern aufgelockert, um die Trocknung zu vereinfachen. Ihre Trocknung erfolgt bevorzugt im Luftstrom.

Eine bevorzugte Herstellungsweise des erfindungsgemäßen Materials ist wie folgt: Ternäres Polyacrylnitril (PAN), das aus den oben aufgeführten drei verschiedenen Monomeren besteht, wird in Wasser gegeben und einer Reaktion mit Kupfer(II)-Ionen und einem Reduktionsmittel unterzogen. Während der Reaktion wird das Kupfer(I)-Ion an die Cyanogruppen des PAN gebunden, d.h. ein Komplex wird gebildet (Reaktionsschema (1)).

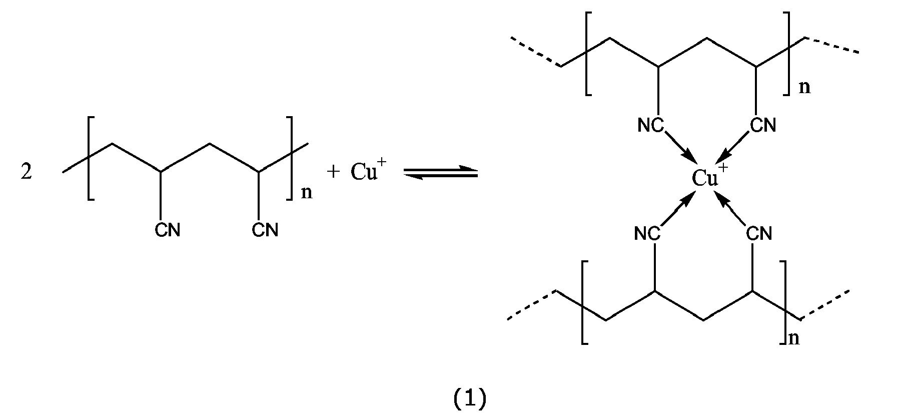

Nach dieser Reaktion wird das erhaltene Produkt mit einer stickstoffhaltigen Verbindung, wie Basic Green 4 oder einer anderen Ammoniumverbindung, umgesetzt. Die stickstoffhaltige Verbindung wird dabei an das dritte Monomer des Trägerpolymers gebunden (Reaktionsschema (2) am Beispiel von Basic Green 1 als Ammoniumverbindung und Styrylsulfonsäure als drittes Monomer).

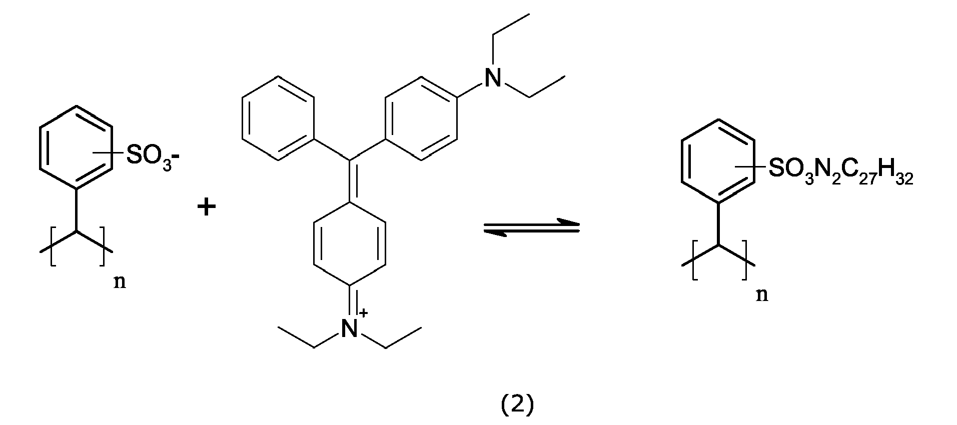

Wenn die obigen Reaktionen miteinander kombiniert werden, entspricht das erhaltene Endprodukt der in Schema (3) gezeigten Formel:

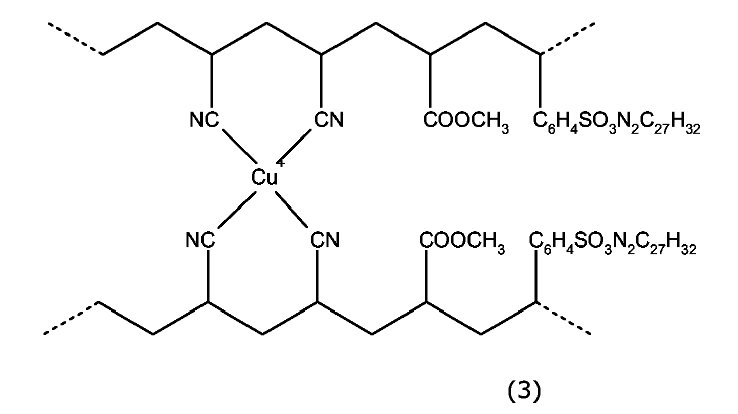

Die chemische Reaktion, welche zum erfindungsgemäßen Material führt, ist eine heterogene Reaktion. Daher findet die Reaktion an der Grenzfläche zwischen zwei Phasen statt. Die Zahl der gebundenen Metallkationen und nichtmetallischen Kationen in dieser heterogenen Reaktion ist also viel geringer als bei einer homogenen Reaktion. Atomabsorptionsspektroskopische Aufnahmen bestätigen, dass das Produkt in der Regel mindestens etwa 1,0 Gew.-% Metallkationen (wie z.B. Kupfer(I)-Ionen) enthält. Mit Infrarotspektrophotometrie wurde auch die ionische Bindung des nichtmetallischen Kations an das Trägerpolymer bestätigt.

PAN ist ein petrochemisches Produkt. Aufgrund verschiedener Herstellungsverfahren verschiedener Firmen kann also der Gehalt an Cyanogruppen und an drittem Monomer im ternären PAN, das im erfindungsgemäßen Material als Träger dient, etwas variieren. Wenn das PAN mit Metallkationen und nichtmetallischen Kationen verknüpft wird, ist die Zahl der im Produkt vorhandenen Metallkationen und nichtmetallischen Kationen dementsprechend flexibel. Die Abweichung des Metallkationen-Gehalts beträgt bis zu ±10% desjenigen Gehalts, der in einem Trägerpolymer mit der Copolymer-Zusammensetzung 90 bis 96 Gew.-% erstes Monomer, 4 bis 8 Gew.-% zweites Monomer, 0,01 bis 1 Gew.-% drittes Monomer zu erwarten wäre. Letzterer wiederum hängt von der Konzentration des Metallkations im Reaktionsgemisch bei der Herstellung und von der Reaktionsdauer ab.

Sowohl das Metallkation als auch das nichtmetallische Kation haben schon alleine eine antimikrobielle Funktion; zusammen verleihen sie dem erfindungsgemäßen antimikrobiellen Material die Fähigkeit, Mikroorganismen abzutöten. Diese Abtötung kommt dadurch zustande, dass die Zellwand des Mikroorganismus bei Kontakt mit dem erfindungsgemäßen Material kollabiert und der Organismus infolgedessen abstirbt. Daraus ergibt sich die Verwendung gemäß Ausführungsform (6) und (9) sowie der Einsatz des Materials in den Produkten der Ausführungsform (7) und (8).

Das erfindungsgemäße Material hat eine hervorragende abtötende Wirkung auf pathogene Bakterien, Hefen und Pilze, z.B. pyrogene Kokken (Streptokokken, wie *Streptococcus pyrogenes, Streptococcus pneumoniae,* und β-hämolytische *Streptococcus, Staphylococcus aureus, Meningococcus, Neisseria gonorrhoea* und dergleichen), *Enterobacteriaceae* (wie *Escherichia coli,* Schmitz's Bacillus, *Salmonella typhi, Salmonella paratyphi, Salmonella typhimurium, Salmonella enterica, Salmonella enteritidis, Salmonella choleraesuis,* Morgan's Bacillus, *Bacillus pneumonia, Pseudomonas aeruginosa* und dergleichen), pathogene Pilze (wie *Candida albicans, Cryptococcus neoformans, Trichophyton rubrum, Trichophyton rosaceum, Microsporum gypseum,* Fadenpilze und dergleichen), etc. Insbesondere wirkt das Material mikrobizid auf Brevibakterium, MRSA, *S. aureus, T. rubrum* und andere Fußpilzerreger (wie *T. mentagrophytes), C. albicans, E. coli, Citrobacter koseri, S. epidermisis* und *S. enterica.* Des Weiteren ist wegen der hohen Bakterizidität bzw. Fungizidität auch eine bakteriostatische und fungistatische Wirkung auf solche Keime, welche weniger stark auf das Material ansprechen, eingeschlossen. Auch bei Produkten, welche das erfindungsgemäße Material in Anteilen unterhalb von 1 Gew.-% enthalten, ist eine zumindest bakterio- bzw. fungistatische Wirkung zu erwarten.

Das Material gemäß Ausführungsform (1) bis (3) wirkt wie in Bsp. 3 gezeigt antimikrobiell (von "die Vermehrung verhindernd" bis "Abtötung auf 99,9%"), vor allem bakterizid (Abtötung von 99,9% der Bakterien innerhalb 6 Stunden (DIN-Norm), vgl. Bsp. 3.3b, 3.4, 3.5, 3.6, 3.9, 3.12 und 3.14; bzw. Abtötung von 99,9% der Bakterien innerhalb von 24 Stunden (amerikanische Norm)), aber auch fungizid (vgl. Bsp. 3.7), bakteriostatisch, und fungistatisch (vgl. Bsp. 3.7 und 3.8). Wie in Bsp. 3 gezeigt, besitzt das erfindungsgemäße Material als Faser, Mikropartikel und als Bestandteil in einem Garn oder Vlies eine hohe antimikrobielle Wirksamkeit.

In der Verwendung gemäß Ausführungsform (6) bzw. den Produkten der Ausführungsform (7) wird bzw. ist das antimikrobielle Material in die Produkte eingearbeitet oder mit der Oberfläche des Produkts verbunden, oder die Produkte werden bzw. sind zur Gänze aus dem antimikrobiellen Material hergestellt. Die Einarbeitung der erfindungsgemäßen Mikropartikel erfolgt in einem bevorzugten Aspekt durch Untermischen, Beschichtung, Imprägnierung oder eine andere geeignete Methode zur Verbindung der Mikropartikel mit den anderen Bestandteilen. So werden Textilien (insbesondere Gewebe) und Filtermaterialien bevorzugt mit den Mikropartikeln beschichtet oder imprägniert, während die Partikel in halbfeste und flüssige Materialien wie technische Gele, Schäume, Cremes oder Materialien zur Behandlung von Oberflächen (Lack, Wandfarbe etc.), und in Verbundmaterialien wie Schaumstoffe, Lederverbund, Zelluloseverbund, Glasfaserverbund etc. untergemischt werden. Die Einarbeitung der erfindungsgemäßen Faser in Textilien erfolgt in einem bevorzugen Aspekt durch übliche Verfahren zur Herstellung von Textilien wie Verspinnen, das Verarbeiten eines die Faser enthaltenden Garns oder Vliesherstellung. In andere Produkte kann die Faser in der gleichen Weise wie für die Mikropartikel beschrieben eingearbeitet werden.

In der Verwendung (6) verleiht bevorzugt alleine das antimikrobielle Material den hergestellten textilen und nichttextilen Produkten deren antimikrobielle Wirkung. Dasselbe gilt für die Produkte der Ausführungsform (7).

In einem bevorzugten Aspekt der Ausführungsformen (6) und (7) enthalten oder bestehen die Produkte aus Vlies, Filz, Gewebe, Gewirke, Gestricke, Schaumstoff, Kunststoff, Gummi, Folie und/oder Papier. Besonders bevorzugte Produkte sind in den Ausführungsformen (6) und (7) textile Produkte (Textilien wie oben definiert). Der Einsatz des erfindungsgemäßen Materials (1) bis (3) kann jedoch nicht nur in Textilien erfolgen. Auch ein Einsatz in nichttextilen Stoffen wie Keramik, Kunststoff, PUR-Weichschaumstoffen, Gummi, Farben, Lack, Polyshield, Gebäudebeschichtungen, Latex, Leim und Kleber, Cremes, Gelen und Puder, Verbundmaterialien und Bindermaterialien ist möglich.

Ein bevorzugter Aspekt der Ausführungsformen (6) und (7) ist die Verwendung des erfindungsgemäßen Materials in Kunststoffprodukten. Diese Kunststoffe können zu Formteilen, Halbzeugen, Fasern oder Folien weiterverarbeitet werden, insbesondere zu Verpackungen aus Polymerfolien, technischen Teile, Baustoffen, Hygieneartikeln, Chemikalienhandschuhen etc.

Außer dem erfindungsgemäßen Material können in den Produkten der Ausführungsformen (6) und (7) bis zu 99 %, bevorzugt bis zu 90 %, besonders bevorzugt bis zu 75 % andere Materialien vorhanden sein. In einem ganz besonders bevorzugten Aspekt bestehen die Produkte jedoch aus dem erfindungsgemäßen Material.

Teilt man die Einsatzgebiete für die Produkte und Verwendungen der Ausführungsformen (6) bis (9) ein, so ergeben sich zwei große bevorzugte Einsatzgebiete: Haushaltswaren und medizinische Produkte (einschließlich Produkte für den Einsatz in Praxen und Kliniken, wie Schutzbekleidung, OP-Produkte, Körperpflegeprodukte, Bettausstattung, Raumausstattung und Beförderungsmittel). Diese umfassen Produkte zum Zwecke der Reinigung, Trocknung, Filterung, der Aufbewahrung und des Schutzes von Gegenständen und Personen.

Im Einzelnen eröffnen sich in den Ausführungsformen (6) bis (9) folgende Einsatzgebiete für die Mikropartikel gemäß Ausführungsform (3):
A. medizinische Anwendungen in PUR-Weichschaumstoffen und Verbundschaum: Krankenhausmatratzen, Liegen, Sitze, Matten im Krankenhaus, Wundauflagen sowie Schaumstoffauflagen zur Prophylaxe;
B. medizinische Anwendungen mit anderen Trägermaterialien aller Art: Wundauflagen, Verbandmaterial, Beschichtung medizinischer Geräte sowie Kunststoffe für Medizinprodukte, Einbringung in Cremes, Gele und Puder für medizinische Anwendungen, Einbringung in Implantatkunststoffe, Folien;
C. Haushaltanwendungen einschließlich Anwendungen im Krankenhaus- sowie Pflegebereich und Homecare:
   Einweg- oder Mehrweg-Putz- und -Wischtücher sowie Handtücher,
   Einweg- sowie Mehrwegbettwäsche und Matratzenauflagen,
   Matratzenbezüge und Möbelbezugsstoffe sowie Bezüge für Matten aller Art (Sport-, Tierhygienematten für Nutz- und Haustierhaltung),
   Teppichträgermaterialien aller Art sowie Fußmatten, Weichschaumtapeten,
   Behältnisse aller Art einschließlich Müll- und Staubsaugerbeutel, Lebensmittelverpackungen, Folien,
   Hygieneauskleidungen aller Art (Papier, Folien, Schäume, Vliese, Gewebe) in Haushalt, Krankenhaus und Pflege, und
   Einwegmaterialien für den Haushalt wie Filter, Folien, Putztücher, Wischtücher, Haushaltschwämme sowie Kosmetikschwämme;
D. Bekleidung:
   Bekleidungstextilien aller Art einschließlich Strümpfen,
   Schuheinlagen sowie Schuhfutter, Schuhspanner und Helmfutter;
E. Reinraumanwendungen:
   Abluftanlagen und Klimaanlagen sowie Staubsauger, Boden-, Wand-, Deckenverkleidungen aller Art; und
F. Anwendungen im Rahmen von Protection-Systemen:
   zur Senkung von nosokomialen Infektionen im Krankenhaus, zur systemischen Dekubitus- und Fußpilz-Prophylaxe, zur systemischen Behandlung von Neurodermitikern und bei Massentierhaltung.

Bevorzugt werden die erfindungsgemäßen Mikropartikel durch Beschichtung auf die genannten Produkte aufgebracht. Die erfindungsgemäßen Mikropartikel eignen sich im nichttextilen Bereich insbesondere für Ausrüstung von Filtern und Behältnissen aller Art einschließlich Staubsaugerbeutel, Müllbeutel etc.

Daneben können die erfindungsgemäßen Partikel als Bestandteile von Dispersionen, Kolloiden, Gelen und Solen und zur Herstellung derartiger Produkte zum Einsatz kommen.

Handelt es sich bei den erfindungsgemäßen Partikeln um Nanopartikel, so ist der Einsatz zur Herstellung von Nanosphären und Nanoröhrchen ("Nanotubes") möglich.

Die Verwendung der erfindungsgemäßen Faser erfolgt bevorzugt in Textilien, insbesondere in textilen Halb- und Fertigfabrikaten einschließlich Garne, Gewebe, Gewirke, Gestricke, Vliese, Filze und textilen Fertigwaren einschließlich Kleidung. Für die erfindungsgemäßen Fasern und Textilien eröffnen sich in den Ausführungsformen (6) bis (9) bevorzugt folgende Einsatzgebiete:

### A) medizinische Anwendungen für textile Gewebe, Gestricke, Gewirke, Vliese und Filze:

Arbeitskleidung für Krankenhaus und Pflegeeinrichtungen, Patientenkleidung für Krankenhaus, Krankenhausbesucherkleidung, Abdecktücher und OP-Auflagen, Krankenhausbettwäsche, Krankenhausmatratzenbezüge, Bezüge für Liegen, Sitze, Matten im Krankenhaus
Verbandmaterial und Wundauflagen
OP-Mundschutzmasken
Sperr- und Saugvliese wie Windeln und Inkontinenzunterlagen
Stilleinlagen und Slipeinlagen

### B) Haushaltanwendungen für Textilstoffe wie Gewebe, Gewirke und Gestricke, Vliese und Filze:

Möbelstoffe, Dekostoffe, Tischdecken, Schlafdecken
Putz- und Wischtücher, Handtücher, Kosmetiktücher, Handtücher und Bettwäsche,
Matratzenauflagen, Matratzenbezüge und Möbelbezugsstoffe sowie Bezüge für Matten aller Art (Sport-, Tierhygienematten)
Teppiche aller Art sowie Fußmatten, Textiltapeten, Gardinen
Behältnisse aller Art wie Müll- und Staubsaugerbeutel, Lebensmittelverpackungen
Hygieneauskleidungen aller Art im Haushalt

### C) Bekleidung aus Textilstoffen (gewebt, gewirkt, gestrickt), Vlies, Filz:

Bekleidung aller Art einschließlich Unterwäsche, Strümpfe
Schuheinlagen sowie Schuhfutter und Helmfutter
Einwegtextilien aller Art

### C) Reinraumanwendungen für Textilstoffe (gewebt, gewirkt, gestrickt), Vlies, Filz:

Filtervliese, -filze aller Art für Abluftanlagen und Klimaanlagen sowie Staubsauger Boden-, Wand-, Deckenverkleidungen aller Art
Arbeitskleidung aller Art Heimtextilien wie Gardinen und Möbelbezugsstoffe

### D) Anwendungen im Gartenbau:

Abdeckvliese zur Verwendung beim Anbau von Pflanzen und Gemüse.

Die Anwendungsgebiete für das erfindungsgemäße Vlies sind besonders vielfältig und beinhalten Geotextilien, Filter (für Flüssig- und Gasfiltration), medizinische Textilien (wie Einweg-OP-Kleidung, Wundpflaster, Inkontinenzartikel, Windeln), Kleidung(steile), Schuh(teil)e, Reinigungstücher, Bodenbelag, Heimtextilien und Baustoffe.

Auch PUR-Schäume, die das erfindungsgemäße Material enthalten, besitzen eine ausgezeichnete antimikrobielle Aktivität und können in Krankenhaus- und Hygieneanwendungen verwendet werden, insbesondere als Matratze oder Hygienematte.

Eine besondere Verwendung gemäß Ausführungsform (9), in welcher sowohl nichttextile als auch textile Produkte aus dem erfindungsgemäßen Material zum Einsatz kommen, sind sogenannte Protection-Systeme (Schutzsysteme). Hierunter versteht man Zusammenstellungen von verschiedenen antimikrobiellen Produkten, deren kombinierte Anwendung eine Ausbreitung von pathogenen Mikroorganismen verhindern soll.

Die Produkte gemäß Ausführungsform (6), (7) und (8) kommen bevorzugt in folgenden Anwendungsgebieten zum Einsatz:
1) Krankenhaus und Altenheim: Durch räumlich/personelle Barrierezonen können mikrobielle Besiedelung, Kontamination, Infektionsherde und Übertragungsrisiken eingegrenzt werden, Infektionen und Reinfektionen werden unterbunden und Eradikationsprozesse abgekürzt. Dies verkürzt unter anderem die Isolierphase bei MRSA-Patienten (infiziert mit Antibiotika-multiresistenten *S. aureus),* senkt nosokomiale Infektionen und senkt das Risiko unkontrollierter Ausbreitung von Pathogenen. Zentrum ist der Patient und sein Bett mit folgenden Produkten: Patientenkleidung (z.B. Hemd, Pantoffel, Handschuhe, Serviette, Mundschutz), Hygieneartikel: (z.B. Inkontinenzprodukte, Handtücher, Waschlappen), Bettartikel (Einweg-Bettwäsche, Textil-Bettwäsche, Matratzen, Matratzenauflagen). Das Bett wird umschlossen von antimikrobiell ausgerüsteten Oberflächen im Raum (Fußboden, Wände, Klimaanlage, Mobiliar, Gardinen, Putztücher). Ergänzend zu der räumlichen antimikrobiellen Ausrüstung wirkt Schutzkleidung für andere Personen neben dem Patienten, insbesondere Personal- und Besucherkleidung, OP-Bekleidung, Masken, Abdecktücher, Schuhe, Kopfschutz und Putztücher.
2) häusliche Pflege: Vermeiden unnötiger oder zusätzlicher Infektionsrisiken durch Bettwaren, auch Matratzen und Leibwäsche, Inkontinenzartikel, Schutzauflagen und hautstabilisierende Hautpflege, welche das erfindungsgemäße Material enthalten.
3) Haus und Bau: Schwerpunkt mikrobieller Belastungen im Haus ist der Pilz *Aspergillus niger.* An potentiellen Feuchtstellen und in schlecht belüfteten oder Klimanlagen-belüfteten Räumen finden Pilze hervorragende Lebensbedingungen. Neben den optischen Unannehmlichkeiten haben die Sporen der Schimmelpilze ein hohes allergenes und krankmachendes Potential. Für eine vorsorgliche Anti-Schimmelpilz-Ausrüstung in unterschiedlichen Grundmaterialien (einschließlich Fugenmaterial, Tapeten, Beton, Wand- und Deckenfarben, Teppichböden) eignen sich die Mikropartikel gemäß Ausführungsform (3).
4) Nutztierhaltung: Bakterien in Rindern, Schweinen und Geflügel sind meinst gegen mindestens ein Antibiotikum resistent. Die mikrobielle Belastung in Ställen ist hoch. Oberflächen, welche das erfindungsgemäße Material enthalten, können durch ihre permanente Wirksamkeit das Keimniveau senken und dadurch Übertragung verhindern.
5) Gastgewerbe: Hotels sind traditionell Infektionsherde; die mikrobielle Belastung in Hotelbetten muss als sehr hoch bezeichnet werden. Materialien, die mit dem erfindungsgemäßen Material ausgerüstet wurden und daher eine permanent dekontaminierende Eigenschaft haben, ermöglichen eine dauerhafte, wartungsfreie, antimikrobielle Wirkung für das gesamte Bett mit Matratzen, Auflagen und Bettwäsche.
6) Personenbeförderung: Überall wo sich Menschen bewegen, hinterlassen sie durch Ausatmen, Berührung und Ablagerungen von ihrer Bekleidung mikrobielle Spuren. Durch Dauerdekontaminierung mit Hilfe des erfindungsgemäßen Materials werden Griff- und Sitzflächen in öffentlichen Verkehrsmitteln ohne zusätzliche Hygienemaßnahmen ihres gefährlichen Potentials beraubt. Entsprechend ausgerüstete Lüftungs- und Klimaanlagen ermöglichen eine Abtötung luftgetragener Bakterien und Pilze.
7) Dekubitus: Ein Druckgeschwür ist die Folge einer Nekrose der Haut und der darunter liegenden Gewebe aufgrund anhaltender Druckbelastung. Die im Stuhl und Urin befindlichen Bakterien wirken permanent auf die Haut ein. Hautschäden sind die Folge. Die Feuchtigkeit aus Urin lässt die oberen Hautschicht aufquellen. Bakterien und Pilze nisten sich ein und vermehren sich. Infektionen durch pathogene Bakterien und Pilze verursachen zusätzliche Belastungen (Windeldermatitis) und reduzieren die Widerstandskraft der Haut. Ein erfindungsgemäßes Schutzsystem setzt sich zusammen aus (a) einem antimikrobiellen Liege-Entlastungssystem aus Technogel, Schäumen und anderen Materialien, (b) antimikrobiellen Inkontinenzartikeln, (c) Hautpflege, und (d) Spezial-Bett- und Leibwäsche.
8) Windeldermatitis: entsteht durch das Zusammenwirken dreier Faktoren: gestaute Feuchtigkeit (Aufweichen der Haut), Bakterien und Pilze (Infektionen) und okklusives Milieu (Wärmestau). Feuchte Haut begünstigt die Windeldermatitis, denn sie begünstigt die Vermehrung von Bakterien und Pilzen aus Stuhl und Urin. Wird Urin zersetzt, entsteht Ammoniak, das Hautmilieu wird alkalisch. Der Säureschutzmantel bricht zusammen. Dann finden der Hefepilz *Candida albicans* oder andere Erreger, wie Staphylokokken und Streptokokken, ideale Voraussetzungen vor und die Haut reagiert mit Entzündungen. Durch die erfindungsgemäße antimikrobielle Ausrüstung von Baby- und Erwachsenen-Windeln wird das Keimniveau gesenkt und Infektionen vermieden. Der Einsatz bei akuter Windeldermatitis lässt Infektionen, Rötungen und Schmerzen abklingen. Diese Aussagen wurden in einem Heilversuch bei Dermatest® (vgl. Bsp. 9) bestätigt.
9) Tinea pedis (Fußpilz), Fußgeruch und diabetisches Fußsyndrom (DFS): In Schuhen finden Bakterien und Pilze hervorragende Lebensbedingungen. 90 % aller Sportler, 60 % der Allgemeinbevölkerung haben Fußpilz. Trotz sehr wirkungsstarker Antimykotika konnte dieser Anstieg der Infektionsrate nicht aufgehalten werden. Grund ist das Fehlen sicherer Prophylaxemaßnahmen, die das Infektions- und das Reinfektionspotential bannen könnten. Durch Verwendung des erfindungsgemäßen Materials kann ein Fußumfeld geschaffen werden, in dem die Tendenz zu Neu-Infektionen oder Re-Infektionen minimiert wird. Dies wird in Bsp. 3.7 gezeigt, welches mit dem Fußpilzerreger *T. rubrum* durchgeführt wurde. Geeignete Fertigprodukte enthaltend das Material gemäß Ausführungsform (1) bis (3) sind: Schuhe, Arbeitsschuhe, Sportschuhe, Badeschuhe, Hausschuhe, Einwegschlappen, Socken, Füsslinge, Waschhandschuhe, Abtrockentücher, Einlegesohlen, Schuhspanner, Zehenstöpsel, und Hautpflegecremes.
10) Wundversorgung: Wunden entwickeln meist Infektionstendenzen durch Keime. Mit dem erfindungemäßen Material ausgerüstete Wundauflagen ermöglichen eine permanente Keimreduzierung. Von besonderer Bedeutung ist dabei die Wirksamkeit gegen MRSA und andere pathogene Bakterien, die für lokale Wundinfektionen und nosokomiale Infektionen verantwortlich sind.
11) Neurodermitis: Bei Neurodermitis entwickeln sich meist auf der Haut Superinfektionen mit Staphylokokken. Diese können durch Einsatz des erfindungsgemäßen Materials in Kleidung und in Zubereitungen zum Auftragen auf die Haut vermieden werden.
12) Infektionskrankheiten einschließlich Vogelgrippe und SARS: SARS und viele weitere Infektionskrankheiten werden durch Einatmen von kontaminierter Luft und Aerosolen verursacht, Vogelgrippe und weitere Infektionskrankheiten durch engen Kontakt mit infizierten Tieren und wahrscheinlich auch durch engen Kontakt mit infizierten Menschen. Schutzbekleidung und Mundschutze mit dem erfindungsgemäßen Material stellen eine Möglichkeit dar, Infektionsketten zu unterbrechen.
13) Intiminfektionen: Durch Oberflächen mit dem erfindungsgemäßen Material werden Geruchsentwicklung und Infektionsrisiken minimiert.

Das erfindungsgemäße Material kann sowohl in Einweg-Produkten als auch in mehrfach verwendeten Produkten eingesetzt werden. Dies gilt insbesondere für den Einsatz in Textilien, das Material kann also in Einweg- oder Mehrweg-Textilien verwendet werden.

Die bei weitem bevorzugte Verwendung der erfindungsgemäßen Materialien gemäß Ausführungsformen (6) und (7) ist die Verwendung in Textilien, vor allem in medizinischen Textilstoffen und Textilien, wie chirurgischer Kleidung, Schutzmasken, Leintüchern, Sperr- und Saugvliesen, ungewebten Tuchen, OP-Tischtüchern, aber auch in anderen körpernahen Textilien, bei denen eine mikrobielle Wirkung erwünscht ist, wie Unterwäsche, Bettwäsche und Matratzendrelle.

Bevorzugte Einsatzgebiete der erfindungsgemäßen Vliese sind Schutzkleidung und Schutzmasken sowie Filter und Behältnisse (z.B. für Staubsauger). Dies gilt insbesondere für Vliese, welche nach dem Heisspressverfahren hergestellt wurden. Nadelvliese kommen dagegen vor allem in Textilien zum Einsatz, insbesondere in Filtervliesen, Matratzen und Kleidung.

Textilien einschließlich Garne, welche das erfindungsgemäße Material gemäß Ausführungsform (1) bis (3) enthalten, können grundsätzlich wie jede andere Textilie bearbeitet, weiterverarbeitet oder durch zusätzliche Ausrüstungsschritte/Ausrüstemittel veredelt werden. Solche zusätzlichen Ausrüstungsschritte/Ausrüstemittel umfassen das Textilfinishing, was insbesondere bei oft gewaschenen Textilien vorteilhaft ist, das Schlichten und das Aufbringen von Schlichtehilfsmitteln, die Vorbehandlung der Textilien (z.B. durch Aktivatoren, Stabilisatoren und Peroxidkiller für die Peroxidbleiche, Extraktionsmittel, Komplexbildner, Netz- und Waschmittel, Reduktionsbleichnlittel, Vorbehandlungsrtlittel für den Druck von Wolle usw.), optische Aufheller, Färbereihilfsmittel (Abzieh- und Aufhellungsmittel, Antireduktionsmittel, Dispergiermittel und Schutzkolloide, Egalisiermittel, Hilfsmittel gegen Faltenbildung, Klotzhilfsmittel, Komplexier- und Sequestriermittel für das Färbebad, Nachbehandlungsnlittel, Netzmittel, Oxidationsnlittel, pH-Wert-Regulatoren, Reduktionsmittel, Schaumdämpfer, Wollschutzmittel etc.), Ausrüstungsadditive für das Finishing (Glättungs- und Weichmachungsmittel, Antifilzbehandlung, Antisettingbehandlung, Binder und Hilfsmittel für das Pigmentfärben, Füll- und Versteifungsmittel, Hydrophilierungsmittel, Hydrophobiermittel, Netzmittel, Entschäumer, Vernetzer etc.), Pigmentdruck und Druck mit faseraffinen Farbstoffen, Textilbeschichtung.

Eine weitere bevorzugte Verwendung des erfindungsgemäßen Materials ist sein Einsatz in Einweg-Artikeln für die Haushalt. Dies umfasst Filter (für Ablufthauben, Staubsauger, Wasserhähne, Wasserfilter), Behältnisse (wie Müll- und Staubsaugerbeutel, Brotzeittüten), Einwegtextilien (wie Wischtücher), Folien, etc.

In pharmazeutischen, veterinärmedizinischen oder kosmetischen Zusammensetzungen der Ausführungsform (8) ist die Zusammensetzung zur topischen Applikation geeignet. Die topische Applikation schließt die Applikation von weiteren Wirkstoffen in derselben Zusammensetzung mit ein. Die Applikation kann durch Aufbringen einer wie oben beschriebenen Textilie, insbesondere eines Vlieses oder Tuchs, enthaltend das erfindungsgemäße Material, oder durch Aufbringen einer pharmazeutischen Zubereitung wie einer Creme, eines Gels oder einer Lösung (z.B. Tonikum zum Einreiben) erfolgen. Auch die Aufbringung eines Pulvers oder Puders enthaltend das erfindungsgemäße Material in Partikelform ist ein Aspekt der Ausführungsform (8) (vgl. Bsp. 9). Insbesondere kann die Zusammensetzung der Ausführungsform (8) in nicht-fester Zubereitung eine Creme, ein Gel, ein Puder, ein Kolloid oder ein Schaum sein, in fester Form ein Verbandsmaterial, eine Wundauflage, eine Maske, ein Strumpf oder Wäsche.

Die Zusammensetzung gemäße Ausführungsform (8) enthält neben dem erfindungsgemäßen Material optional noch einen oder mehrere weitere Wirkstoffe (z.B. zur Behandlung von Entzündungen oder zur Verbesserung der Hautstruktur) sowie für die jeweilige Applikationsform übliche pharmazeutischen, kosmetische oder veterinärmedizinische Trägermaterialien und Zusatzstoffe.

Die Auswahl und Zusammensetzung der geeigneten Applikationsform und der applizierten Dosis richtet sich nach der geplanten Anwendung und der Schwere des mikrobiellen Befalls.

Die Zusammensetzung der Ausführungsform (8) kann neben dem erfindungsgemäßen Material noch andere antimikrobielle oder anderweitige Wirkstoffe enthalten. Ein bevorzugter Aspekt der Ausführungsform (8) ist, dass die Zusammensetzung keine weiteren antimikrobiellen Wirkstoffe neben dem erfindungsgemäßen Material enthält.

Die Zusammensetzungen der Ausführungsform (8) sind zur Behandlung und Prävention aller Arten mikrobiellen Befalls geeignet, besonders zur Therapie und Prävention des Befalls von Haut (einschließlich der Kopfhaut) und Haaren, ganz besonders zur Therapie von Infektionen, Tinea capitis (Pilzerkrankungen der Kopfhaut), Tinea pedis, Akne, Windeldermatitis, Neurodermitis, Erysipel, Mykosen, infizierte oder infektionsgefährdete Wunden, insbesondere offene verunreinigte Wunden, Intertrigo ("Wundsein"), Schürfwunden und Brandwunden, chronischen Wunden und offenen Stellen, mikrobiell besiedelten Hautarealen, insbesondere MRSAbesiedelten Hautarealen.

Das erfindungsgemäße Material kann in einem bevorzugten Aspekt der Ausführungsform (8) auch zur Behandlung von Juckreiz, Schnitten und kleineren Wunden und zur Behandlung oder Prävention und Linderung von Hautkrankheiten bei Mensch und Tier verwendet werden (vgl. Bsp. 9). Das Mittel ist in diesem Falle vorzugsweise ein Feststoff, also ein Pulver, Gewebe oder Nonwoven (Vlies/Filz), welches das erfindungsgemäße Material enthält. Dieses Pulver kann direkt auf die Haut (Wunde) aufgetragen oder über ein geeignetes Trägermaterial (d.h. ein Tuch oder einen Textilstoff, aber auch eine topische Applikationsform wie eine Creme oder ein Gel) appliziert werden.

Das erfindungsgemäße Material ist in einem Aspekt der Ausführungsform (9) geeignet, um verderbliche Produkte, wie Kosmetika, Prozesshilfsmittel usw., zu stabilisieren. Zudem kann es zur Erhöhung der Haltbarkeit verderblicher Nahrungsmittel eingesetzt werden, indem diese Nahrungsmittel in einem Behältnis (Folie, Container, Schachtel o.ä.) aufbewahrt werden, welches das erfindungsgemäße Material enthält.

Schließlich ist das Material der Ausführungsform (1) bis (3) auch geeignet, um Zusammensetzungen herzustellen, welche inaktivierte Bakterien enthalten. Derartige Zusammensetzungen sind als Pharmaka, Nahrungsmitteladditive oder ähnliches geeignet. Die Zusammensetzung kann das erfindungsgemäße Material noch enthalten oder nicht mehr enthalten, bevorzugt enthält es das Material nicht mehr.

Die folgenden Beispiele veranschaulichen die vorliegende Erfindung, sollen den Gegenstand der Erfindung jedoch nicht einschränken.

### Beispiele

Alle verwendeten Chemikalien wurden von Shanghai JinYuan Mineral Products, Wuqiang Hengshui Hebei, Xintai Copper Industry Co., Ltd., Weifang No. 3 Industrial Chemicals, Shanghai Pudong Chemical and Material Supply und von Guangxi Province Nanning Mineral Products, alle in China, bezogen. Das ternäre PAN wurde von der Sinopec Shanghai Petrochemical Company Ltd., China, erhalten.

Mikrobiologische Analysen wurden angefertigt bei: ISEGA Forschungs-und Untersuchungs-Gesellschaft mbH, Aschaffenburg, Deutschland; Antiinfectives Intelligence GmbH, Rheinbach, Deutschland; Infracor GmbH Analytical Technical Service, Marl, Deutschland.

Chemische Analysen wurden durchgeführt bei: IBACON GmbH, Rossdorf, Deutschland; DyStar Textilfarben GmbH, Frankfurt am Main, Deutschland.

Im folgenden bedeutet "rebac-Pulver" das erfindungsgemäße Material in Partikelform, und "rebac-Faser" das erfindungsgemäße Material in Faserform. Ein "rebac-Vlies" bzw. ein "rebac-Garn" enthalten die rebac-Faser. Der bessern Übersicht halber wird für die eingetragene Marke rebac^{®} stets "rebac" verwendet.

### Beispiel 1: Herstellung des antimikrobiellen Materials ("Rebac")

Das verwendete Rohmaterial wurde zunächst analysiert. Der Gehalt an Kupfersulfat (Qualität II oder höher), PAN (nach Herstellerangaben hergestellt aus 93% Acrylnitril, ca. 6% Methylacrylat und mehr als 0%, aber weniger als 1% Styrolnatriumsulfat) und dem Farbstoff Basic Green 4 (Pulver, technische Qualität) wurde bestimmt.

Folgende Rohmaterial-Mengen wurden abgewogen und verpackt:

| | |
|---|---|
| a. Leitungswasser | 100 I ± 10% (ein Behälter) |
| b. ternäres PAN | 100 kg ± 10% (ein Behälter) |
| c. Kupfer(II)sulfat-Pentahydrat (CAS 7758-9-8) | 10 kg ± 1% (ein Behälter) |
| d. Natriumdithionat (CAS 7631-94-9) | 5 kg ± 5% (ein Behälter) |
| e. Basic Green 4 (Malachitgrün G Chlorid; CAS 569-64-2) | 4 kg ± 1% (ein Behälter). |

Herstellungsschritt 1: PAN (100 kg) wurde in einen Behälter (Behälter A) gegossen, es wurde begonnen zu mischen, und Wasser (jeweils 1 l auf einmal) wurde bis zu einem Gesamtvolumen von 100 l hinzugefügt. Das erhaltene Gemisch wurde 30 bis 40 min lang bei Raumtemperatur (10 bis 25 °C) gerührt. Jede klumpige Ablagerung am Boden des Gemischs wurde vermieden.
   Behälter A wurde dann in einen Ofen (Ofen A) gegeben. Die Ofentemperatur wurde auf 50 °C eingestellt und beobachtet. Das Gemisch wurde mit 30 U/min gerührt.
Herstellungsschritt 2: Sobald das Gemisch A im Ofen A 45-55 °C erreicht hatte, wurde der Behälter A aus dem Ofen A entnommen. Kupfersulfat (10 kg) wurde in das Gemisch A gegossen. Das erhaltene Gemisch wurde Gemisch B genannt. Behälter A wurde in den Ofen A zurückgestellt. Die Temperatur wurde auf 60 °C eingestellt und beobachtet. Nach Erreichen einer Temperatur von 60 °C wurde die Temperatur 30 min lang auf 60 °C gehalten, und Gemisch B wurde mit 30 U/min gerührt.
Herstellungsschritt 3: Sobald Gemisch B in Ofen A 30 Minuten lang erhitzt worden war, wurde Behälter A aus dem Ofen A entnommen. Natriumdithionat (5 kg) wurde in den Behälter A gegossen, und das erhaltene Gemisch wurde Gemisch C genannt. Gemisch C war zu diesem Zeitpunkt nicht pulvertrocken. Behälter A wurde in den Ofen A zurückgestellt.
   Die Temperatur wurde auf 70 °C eingestellt; nach Ereichen dieser Temperatur wurde die Temperatur 30 min lang auf 70 °C gehalten. Gerührt wurde mit 30 U/min.
Herstellungsschritt 4: Sobald Gemisch C in Ofen A 30 Minuten lang erhitzt worden war, wurde Behälter A aus dem Ofen A entnommen. Basic-Green-Farbstoffpulver (4 kg) wurde gleichmäßig in den Behälter A gegossen, und das erhaltene Gemisch wurde Gemisch D genannt. Gemisch D war in diesem Stadium nicht pulvertrocken. Behälter A wurde in Ofen B gestellt. Die Temperatur von Ofen B wurde auf 95 °C eingestellt, und Gemisch D wurde 30 min lang mit 30 U/min gerührt.
Herstellungsschritt 5: Sobald Gemisch D in Ofen B 30 Minuten lang erhitzt worden war, wurde die Temperatur von Ofen B auf 95 °C eingestellt.
   Die Temperatur wurde auf 95 °C gehalten, und Gemisch D wurde weitere 30 min lang mit 30 U/min gerührt.
Herstellungsschritt 6, Filterung : Behälter A wurde aus dem Ofen B entnommen. Ofen B musste vor dem nächsten Durchlauf auf unter 80 °C gekühlt werden. Inzwischen hatte das Gemisch in Behälter A eine ungleichmäßig aussehende Farbe und wurde Verbindung E genannt. Verbindung E ließ man abkühlen, bis sie sicher gehandhabt werden konnte.
   Verbindung E wurde dann auf den Kanal einer Förderstraße verladen. Sie kühlte auf Raumtemperatur ab, während sie auf der Förderstraße war und bevor sie in den Filter eintrat. Mehr als ein Filter wurde verwendet, um den Vorgang zu beschleunigen. Der letzte Filter wurde gemäß der Anforderung an die Maschenweite ausgewählt (in der Regel 100 bis 200 mesh bzw. Teilchendurchmesser 74 µm bis 148 µm). Die filtrierte Verbindung war ein Pulver, das Pulver F genannt wurde.
Herstellungsschritt 7, Waschen und Trocknen: Pulver F wanderte in einen umschlossenen Abschnitt der Förderstraße und wurde dort auf dem Boden geebnet. Wasserdampf wurde verwendet, um Fremdteilchen und Staub von Pulver F abzuwaschen. Sobald das Pulver F gewaschen worden war, wurde es zum Trocknen an der Luft in einen flachen Behälter (Behälter B) gegeben. Ein Filtersieb wurde ggf. als Abdeckung des Behälters B verwendet.
Verpackung: Nach dem Verpacken wurde das luftgetrocknete Pulver F Endprodukt G genannt, und daraus wurde eine Probe entnommen. Das Endprodukt G wurde in Faserbeutel gefüllt, die verschlossen und in Metallfässer gegeben wurden. Sobald der antimikrobielle Bericht in Ordnung war, wurden die Fässer verschlossen. Jedes Fass enthielt netto 30 kg.
Antimikrobieller Test an Endprodukten von REBAC: Für jede Charge (etwa 10 metrische Tonnen REBAC) mussten wenigstens zwei Proben aus dem Testraum genommen werden, eine zu Beginn der Charge und eine am Ende. Die Verfahren AATCC 1971 oder 1981 wurde verwendet, um die Proben zu testen. Wenn die Proben keinen antimikrobiellen Hof zeigten (Verfahren 1971) oder nicht wenigstens 90% der antimikrobiellen Bewertung nach Verfahren AATCC 1981 zeigten, wurde das REBAC der jeweiligen Charge verworfen.

### Beispiel 2: Analyse des Farbstoff- und Kupfergehalts in rebac-Pulver und -Faser

**Tab. 1: Pulver direkt nach der Produktion**

| Komponente | Verfahren | Probe 1 | Probe 2 | Probe 3 | Probe 4 |
|---|---|---|---|---|---|
| Wasser | Karl-Fischer-Titration | 1,69 % | 1,69 % | 1,69 % | n.b. |
| Basic Green | photometrisches Verfahren | 0,23 % | 0,24 % | 0,24 % | 0,37 % |
| Kupfer | Aufschluss/ICP-OES | 1,25 % | 1,24 % | 1,25 % | 1,05 % |
| restliche Monomere | Extraktion/GC-MS | <0,005% | <0,005% | <0,005% | n.b. |

**Tab. 2: Pulver, Kupfergehalt nach Trocknen**

| Zwei Proben aus unterschiedlichen Produktionschargen wurden getrocknet und zweimal auf ihren Kupfergehalt analysiert. | | |
|---|---|---|
| | Charge 1 | Charge 2 |
| Kupfergehalt [Gew.-%)] | 1,1; 1,21 | 1,23; 1,27 |

**Tab. 3: Faser**

| Parameter | Methode | Rebac-Faser |
|---|---|---|
| Gehalt Basic Green 4 | photometrisch | 0,96 % |
| Kupfergehalt | Aufschluss / ICP-OES | 1,44 % |

### Beispiel 3: Antimikrobielle Wirkung von REBAC-ausgerüsteten Materialien ungewaschen:

| | | |
|---|---|---|
| (1) | 100%rebacfaser | *Staph. aureus* |
| (2) | rebacgarn (Anteil rebacfaser=30%) | *Staph. aureus* |
| (3a) | rebacvlies (Anteil rebacfaser=35%) | *Staph. aureus* |
| (3b) | rebacvlies (Anteil rebacfaser=35%) | *Staph. aureus* |
| (4) | rebacgarn (Anteil rebacfaser=30%) | *E. coli* |
| (5) | rebacgarn (Anteil rebacfaser=30%) | *S. enterica* |
| (6) | rebacgarn (Anteil rebacfaser=30%) | *S. epidermidis* |
| (7) | rebacgarn + rebacvlies | *T. rubrum* |
| (8) | rebacgarn + rebacvlies | *C. albicans* |

### Vergleich gewaschen gegen ungewaschen:

| | | |
|---|---|---|
| (9) | rebac-Pulver gewaschen | *Staph. aureus* |
| (10) | rebac-Pulver gewaschen/ungewaschen | *E. coli* |
| | | *Staph. aureus* |
| | | *C. albicans* |
| (11) | rebac-Pulver gewaschen/ungewaschen | *S. epidermidis* |
| (12) | rebacfilz gewaschen/ungewaschen | Brevibacterium |
| | (Anteil rebacfaser=35%) | |
| (13) | rebacgarn, gewirkt gewaschen/ungewaschen | *Staph. aureus* |
| | (Anteil rebacfaser=30%) | |
| (14) | rebacgarn gewaschen/ungewaschen | *Staph.aureus* |
| | (Anteil rebacfaser=30%) | |

Soweit nicht anders angegeben, wurde die folgende Methode verwendet, welche sich an die Standardmethode AATCC 100-1997 anlehnt (im folgenden als "AATCC 100" bezeichnet):

Aus Vlies- und Gewebe-Proben wurden quadratische Prüflinge mit einer Kantenlänge von 22 mm ausgeschnitten. Nach Applikation von 0,25 ml Keimsuspension (Verdünnung in 0,9 % NaCl) pro Prüfling wurden diese in einer sterilen Petrischale bei 25 °C (Schimmelpilze) oder 36 °C (Bakterien) aufbewahrt.

Bei saugfähigen Textilien wurde in Abhängigkeit von der Wasseraufnahmekapazität die Probenmenge an das Volumen der Keimsuspension angepasst.

Beim Test von Garn wurde das Garn mit Keimsuspension (Verdünnung in 0,9 NaCl) versetzt und während der Kontaktzeit in einer sterilen Petrischale bei 36°C aufbewahrt.

Pulverproben wurden in NaCl (0,9%) resuspendiert und während der Kontaktzeit langsam geschüttelt.

Flüssigproben wurden unverdünnt in die Untersuchung eingesetzt und während der Kontaktzeit langsam geschüttelt.

Für jeden Kontaktzeitpunkt wurde ein Prüfling vorbereitet. Bei Kontaktende wurden die Keime in 10 ml Becton Dickinson Difco D/E Neutralizing Broth (Art. Nr. 281910) Neutralisationslösung von den Prüflingen abgelöst und mittels Plattenguss die Keimzahl (KbE bedeutet im folgenden "kolonienbildende Einheit") bestimmt.

### Beispiel 3.1: 100% rebac-Faser mit Staphylococcus aureus

| | |
|---|---|
| Testmethode | AATCC 100 |
| Volumen Keimsuspension | 350 µl |
| Kontakttemperatur | 36 °C |
| Nachweisgrenze | < 10 KbE/Prüfling |
| Testkeim | *S. aureus* DSM 799 |

**Tab. 4: Ergebnisse Test Faser mit S. aureus**

| Probenbezeichnung ezeichnung | Kommentar | Kontaktzeit | Ergebnis | | | |
|---|---|---|---|---|---|---|
| | | | KbE/Prüfling | log Prüfling | Diff. T(x)-T(0) | %-Redukti on |
| 100% rebacfaser | + Wirksubstanz | 0 | 1,60E+05 | 5,20 | 0,0 | 0,00 |
| 0,02 g | + Wirksubstanz | 2 | 4,40E+03 | 3,64 | -1,6 | 97,25 |
| | + Wirksubstanz | 4 | 8,80E+02 | 2,94 | -2,3 | 99,45 |

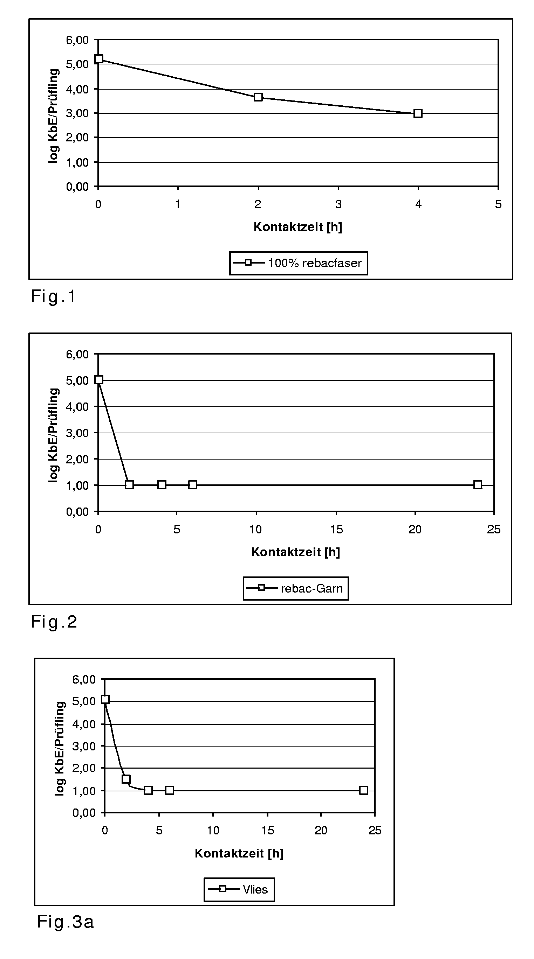

Graphik in Fig. 1.

### Beispiel 3.2 Garn mit 30% rebac-Faseranteil

Getestet wurde die Wirkung des Garns auf *S. aureus.*

| | |
|---|---|
| Testmethode | AATCC 100 |
| Volumen Keimsuspension | 250 µl |
| Kontakttemperatur | 25 °C |
| Nachweisgrenze | < 10 KbE/Prüfling |
| Testkeim | *S. aureus* DSM 799 |

**Tab. 5 : Ergebnis Test Garn mit S. aureus**

| Probenbezeichnung | Kommentar | Kontaktzeit [h] | Ergebnis | | | |
|---|---|---|---|---|---|---|
| | | | KbE/Prüfling | log KbE/ Prüfling | Diff. log. T(x) - T(0) | %-Reduktion |
| rebac-Garn | + Wirksubstanz | 0 | 1,00E+05 | 5,00 | 0,0 | 0,00 |
| | + Wirksubstanz | 2 | 1,00E+01 | 1,00 | -4,0 | 99,99 |
| | + Wirksubstanz | 4 | 1,00E+01 | 1,00 | -4,0 | 99,99 |
| | + Wirksubstanz | 6 | 1,00E+01 | 1,00 | -4,0 | 99,99 |
| | + Wirksubstanz | 24 | 1,00E+01 | 1,00 | -4,0 | 99,99 |

| | | | | | | |
|---|---|---|---|---|---|---|
| "1,00E+01": < 10 KbE/Prüfling | | | | | | |

Graphik siehe Fig. 2.

### Beispiel 3.3a: rebac-Vlies, Absterbekinetik

| | |
|---|---|
| Testmethode | AATCC 100 |
| Volumen Keimsuspension | 250 µl |
| Kontakttemperatur | 25 °C |
| Nachweisgrenze | < 10 KbE/Prüfling |
| Testkeim | *S. aureus* DSM 799 |

**Tab. 6 : Ergebnisse Vlies mit S. aureus**

| Probenbezeichnung | Kommentar | Kontakt-zeit [h] | Ergebnis | | | |
|---|---|---|---|---|---|---|
| | | | Prüfling | log KbE/ Prüfling | Diff. T(x) - T(0) | %-Reduktion |
| rebacvlies | + Wirksubstanz | 0 | 1,10E+05 | 5,04 | 0,0 | 0,00 |
| | + Wirksubstanz | 2 | 3,00E+01 | 1,48 | -3,6 | 99,97 |
| | + Wirksubstanz | 4 | 1,00E+01 | 1,00 | -4,0 | 99,99 |
| | + Wirksubstanz | 6 | 1,00E+01 | 1,00 | -4,0 | 99,99 |
| | + Wirksubstanz | 24 | 1,00E+01 | 1,00 | -4,0 | 99,99 |

| | | | | | | |
|---|---|---|---|---|---|---|
| "1,00E+01": < 10 KbE/Prüfling | | | | | | |

Graphik siehe Fig. 3a.

### Beispiel 3.3b: rebac-Vlies, Absterbekinetik

Material: Caseinpepton-Sojapepton-Agar für Bakterien (Fluka Chemie GmbH), sterile Kochsalzlösung, 0,9%, Spectrophotometer (Novaspec II, Pharmacia Biotech Europe, Freiburg), Vortexer (Heidolph, REAX 2000), rebac-Vlies mit 35%rebac-Faser.

Testkeim: S. *aureus* ATCC 43300 (MRSA)

Inokulumherstellung für Bakterien: Aus einer 18 Stunden alten Übernachtkultur der Bakterien auf Agarmedium wurde jeweils eine Keimsuspension hergestellt, die einer Lebendkeimzahl von circa 1x10⁸ KBE/ml entspricht. Hierfür wurden 1-5 Kolonien in einigen Millilitern NaCI-Lösung suspendiert, bis eine Trübung entstand, die dem McFarland-Standard 0,5 und damit einer Keimkonzentration von etwa 1x10⁸ KBE/ml entsprach.

Die Vliesmuster wurden in gleichgroße Stücke von etwa 2 cm x 2 cm x 0,33 mm zerteilt. Pro Testorganismus wurde jeweils ein Vliesstück mit 0,25 ml der Keimsuspension (Ausgangsinokulum: ca. 9,6x10⁵ KBE/ml) getränkt und in sterilen Petrischalen aufbewahrt. Um die Vliesstücke vor dem Austrocknen zu bewahren, wurden die Petrischalen mit Parafilm umklebt. Die Ansätze wurden bei Zimmertemperatur gelagert. Für jeden Zeitwert wurde ein separater Ansatz erstellt.

Nach einer Einwirkungsdauer von 0 h, 1 h, 3 h, 6 h und 24 h wurden die Vliesstücke mit 5 ml 0,9% -iger Kochsalzlösung in einem Zentrifugenröhrchen 30 Sekunden mit Hilfe eines Vortexers ausgeschwemmt. Anschließend wurde ein Aliquot der Kochsalzlösung in 1:10 Schritten mit 0,9%-iger Kochsalzlösung bis 10⁻⁵ verdünnt und von jeder Verdünnungsstufe 50 µl auf Caseinpepton-Sojapepton-Agar ausplattiert. Die Agarplatten der Bakterien wurden bei 36°C±1°C für 18-24 h inkubiert.

Um die Keimzahl zu ermitteln, wurden die nach der Bebrütung auf dem Agar gewachsenen Kolonien ausgezählt und die Keimzahl auf 1 ml umgerechnet (Kolonie-bildende Einheiten pro ml = KBE/ml).

**Tab. 7: Ergebnisse zweiter Test Vlies mit S. aureus**

| Zeit [h] | Vlies mit Rebac | | | | |
|---|---|---|---|---|---|
| | KBE/ml | log KBE/ml | | Diff. log. T₍ₓ₎ - t₍₀₎ | Änderung der Keimzahl [%] |
| 0 | 5,46E+05 | 5,74 | | 0,0 | 0,00 |
| 1 | 1,68E+03 | 3,23 | | -2,5 | -99,69 |
| 3 | <420 | <2,62 | | -3,1 | -99,997 |
| 6 | <420 | <2,62 | | -3,1 | -99,997 |
| 24 | <420 | <2,62 | | -3,1 | -99,997 |

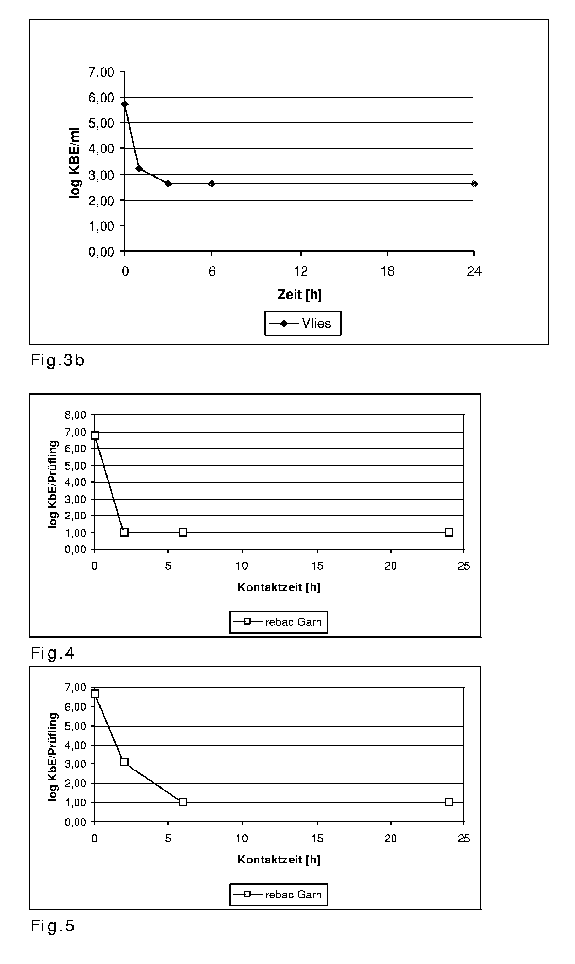

Graphik siehe Fig. 3b.

### Beispiel 3.4: Rebac-Garn mit E. coli

| | |
|---|---|
| Testmethode | AATCC 100 |
| Volumen Keimsuspension | 1,5 ml |
| Kontakttemperatur | 36°C |
| Nachweisgrenze | < 10 KbE/Prüfling |
| Testkeim | *E. coli* DSM 10233 |

**Tab. 8: Ergebnisse Garn mit E. coli**

| Probenbezeichnung | Kommentar | Kontakt-zeit [h] | Ergebnis | | | |
|---|---|---|---|---|---|---|
| | | | KbE/ Prüfling | log KbE/ Prüfling | Diff. log. T(x) -T(0) | %-Reduktion |
| rebac Garn | + Wirksubstanz | 0 | 5,50E+06 | 6,74 | 0,0 | 0,0000 |
| 0,25 g | + Wirksubstanz | 2 | 1,00E+01 | 1,00 | -5,7 | 99,9998 |
| | + Wirksubstanz | 6 | 1,00E+01 | 1,00 | -5,7 | 99,9998 |
| | + Wirksubstanz | 24 | 1,00E+01 | 1,00 | -5,7 | 99,9998 |

| | | | | | | |
|---|---|---|---|---|---|---|
| "1,00E+01": < 10 KbE/Prüfling | | | | | | |

Graphik siehe Fig. 4.

### Beispiel 3.5: rebac-Garn mit S. enterica

| | |
|---|---|
| Testmethode | AATCC 100 |
| Volumen Keimsuspension | 1,5 ml |
| Kontakttemperatur | 36°C |
| Nachweisgrenze | < 10 KbE/Prüfling |
| Testkeim | *Salmonella enterica* subsp. *enterica* DSM 9898 |

**Tab. 10: Garn mit S. enterica**

| Probenbezeichnung | Kommentar | Kontakt-zeit [h] | Ergebnis | | | |
|---|---|---|---|---|---|---|
| | | | KbE/Prüfling | log Prüfling | Diff. log. T(x) - T(0) | %-Reduktion |
| rebac Garn | + Wirksubstanz | 0 | 4,20E+06 | 6,62 | 0,0 | 0,0000 |
| 0,25 g | + Wirksubstanz | 2 | 1,20E+03 | 3,08 | -3,5 | 99,9714 |
| | + Wirksubstanz | 6 | 1,00E+01 | 1,00 | -5,6 | 99,9998 |
| | + Wirksubstanz | 24 | 1,00E+01 | 1,00 | -5,6 | 99,9998 |

| | | | | | | |
|---|---|---|---|---|---|---|
| "1,00E+01": < 10 KbE/Prüfling | | | | | | |

Graphik siehe Fig. 5.

### Beispiel 3.6: rebac-Garn mit S. epidermidis

| | |
|---|---|
| Testmethode | AATCC 100 |
| Volumen Keimsuspension | 1,5 ml |
| Kontakttemperatur | 36°C |
| Nachweisgrenze | < 10 KbE/Prüfling |
| Testkeim | *S. epidermidis* DSM 1798 |

**Tab. 11: Garn mit S. epidermidis**

| Probenbezeichnung | Kommentar | Kontaktzeit [h] | Ergebnis | | | |
|---|---|---|---|---|---|---|
| | | | KbE/ Prüfling | log KbE/ | Diff. log. T(x) - T(0)- | %-Reduktion |
| rebac Garn | + Wirksubstanz | 0 | 1,90E+05 | 5,28 | 0,0 | 0,0000 |
| 0,25 g | + Wirksubstanz | 2 | 1,00E+01 | 1,00 | -4,3 | 99,9947 |
| | + Wirksubstanz | 6 | 1,00E+01 | 1,00 | -4,3 | 99,9947 |
| | + Wirksubstanz | 24 | 1,00E+01 | 1,00 | -4,3 | 99,9947 |

| | | | | | | |
|---|---|---|---|---|---|---|
| "1,00E+01": < 10 KbE/Prüfling Graphik siehe Fig. 6. | | | | | | |

### Beispiel 3.7: rebac-Garn und -Vlies mit T. rubrum

Die Untersuchung erfolgte gemäß ASTM E 2149-01 (Dynamic shake flask test). 0,25 g des Probenmaterials wurden kleingeschnitten und in einen Erlenmeyerkolben mit Phosphatpuffer gegeben. Nach Zugabe des Testkeims wurden zu den angegebenen Zeitpunkten Aliquots entnommen und die Keimzahl des Testkeims bestimmt. Die Prüfansätze wurden schüttelnd inkubiert. Kontakttemperatur: 30°C; Nährmedium: Sabouraud-4%-Glukose-Chloramphenicol-Agar; Bebrütung: 5 d bei 30 °C.
Testkeim: *Trichophyton rubrum* DSM 4167
Nachweisgrenze: <50 KbE/Prüfling

**Tab. 12: Garn mit T. rubrum**

| Probenbezeichnung | Kommentar | Kontaktzeit [h] | Ergebnis | | | |
|---|---|---|---|---|---|---|
| | | | KbE/ml | log KbE/ml | Diff. log. T(x)-T(x) -T(0) | %-Reduktion |
| rebac Garn | + Wirksubstanz | 0 | 2,40E+06 | 6,38 | 0,0 | 0,00 |
| | + Wirksubstanz | 6 | 9,00E+05 | 5,95 | -0,4 | 62,50 |
| | + Wirksubstanz | 24 | 1,60E+05 | 5,20 | -1,2 | 93,33 |
| | | | | | | |
| Vlies | + Wirksubstanz | 0 | 1,50E+06 | 6,18 | 0,0 | 0,00 |
| | + Wirksubstanz | 6 | 8,50E+04 | 4,93 | -1,2 | 94,33 |
| | + Wirksubstanz | 24 | 5,00E+02 | 2,70 | -3,5 | 99,97 |
| | | | | | | |
| KH2P04-Puffer | Referenz | 0 | 1,30E+06 | 6,11 | 0,0 | 0,00 |
| | Referenz | 6 | 1,90E+06 | 6,28 | 0,2 | -46,15 |
| | Referenz | 24 | 1,30E+06 | 6,11 | 0,0 | 0,00 |

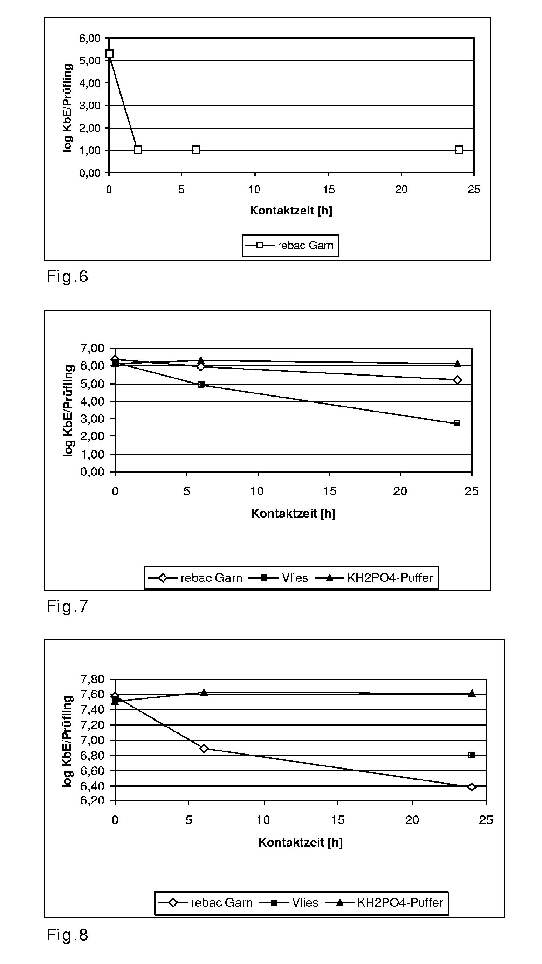

### Graphik siehe Fig. 7.

### Beispiel 3.8: rebac-Garn und -Vlies mit C. albicans

Die Untersuchung erfolgte gemäß ASTM E 2149-01 (Dynamic shake flask test). 0,25 g des Probenmaterials wurden kleingeschnitten und in einen Erlenmeyerkolben mit Phosphatpuffer gegeben. Nach Zugabe des Testkeims wurden zu den angegebenen Zeitpunkten Aliquots entnommen und die Keimzahl des Testkeims bestimmt. Die Prüfansätze wurden schüttelnd inkubiert. Kontakttemperatur: 30 °C; Nährmedium: Sabouraud-4%-Glukose-Chloramphenicl-Agar; Bebrütung: 5 d bei 30°C.
Testkeim: C. *albicans* DSM 1386

| | |
|---|---|
| Volumen Keimsuspension | 1 ml |
| Nachweisgrenze | < 10 KbE/Prüfling |

**Tab. 13: Garn mit C. albicans**

| Probenbezeichnung | Kommentar | Kontaktzeit [h] | Ergebnis | | | |
|---|---|---|---|---|---|---|
| | | | KbE/ml | log | Diff. log. T(x)-T(0) | %-Reduktion |
| rebac Garn | + Wirksubstanz | 0 | 3,70E+07 | 7,57 | 0,0 | 0,00 |
| | + Wirksubstanz | 6 | 7,80E+06 | 6,89 | -0,7 | 78,92 |
| | + Wirksubstanz | 24 | 2,40E+06 | 6,38 | -1,2 | 93,51 |
| | | | | | | |
| Vlies | + Wirksubstanz | 0 | 3,40E+07 | 7,53 | 0,0 | 0,00 |
| | + Wirksubstanz | 6 | n.b. | 7,53 | 0,0 | 0,00 |
| | + Wirksubstanz | 24 | 6,30E+06 | 6,80 | -0,7 | 81,47 |
| | | | | | | |
| KH2P04-Puffer | Referenz | 0 | 3,20E+07 | 7,51 | 0,0 | 0,00 |
| | Referenz | 6 | 4,20E+07 | 7,62 | 0,1 | -31,25 |
| | Referenz | 24 | 4,10E+07 | 7,61 | 0,1 | -28,13 |

Graphik siehe Fig. 8.

### Beispiel 3.9: rebac-Pulver, gewaschen

| | |
|---|---|
| Testmethode | AATCC 100 |
| Volumen Keimsuspension | 250 µl |
| Kontakttemperatur | 36 °C |
| Nachweisgrenze | < 10 KbE/Prüfling |
| Testkeim | Staph. Aureus DSM 799 |

**Tab. 14: Pulver mit S. aureus**

| Probenbezeichnung bezeichnung | Kommentar | Kontaktzeit [h] | Ergebnis | | | |
|---|---|---|---|---|---|---|
| | | | KbE/ml | log KbE/ Prüfling | Diff log. T(x) log. T(0) | %-Reduktion |
| rebac-Pulver, | + Wirksubstanz | 0 | 1,60E+06 | 6,20 | 0,0 | 0,00 |
| gewaschen | | | | | | |
| | + Wirksubstanz | 1 | 1,00E+01 | 1,00 | -5,2 | 100,00 |
| | + Wirksubstanz | 2 | 1,00E+01 | 1,00 | -5,2 | 100,00 |
| | + Wirksubstanz | 6 | 1,00E+01 | 1,00 | -5,2 | 100,00 |
| | + Wirksubstanz | 24 | 1,00E+01 | 1,00 | -5,2 | 100,00 |
| | | | | | | |
| 0,9% NaCl | Referenz | 0 | 2,30E+06 | 6,36 | 0,0 | 4,17 |
| | Referenz | 1 | 2,70E+06 | 6,43 | 0,1 | -12,50 |
| | Referenz | 2 | 2,40E+06 | 6,38 | 0,0 | 0,00 |
| | Referenz | 6 | 1,20E+06 | 6,08 | -0,3 | 50,00 |
| | Referenz | 24 | 5,50E+03 | 3,74 | -2,6 | 99,77 |

| | | | | | | |
|---|---|---|---|---|---|---|
| "1,00E+01": < 10 KbE/Prüfling | | | | | | |

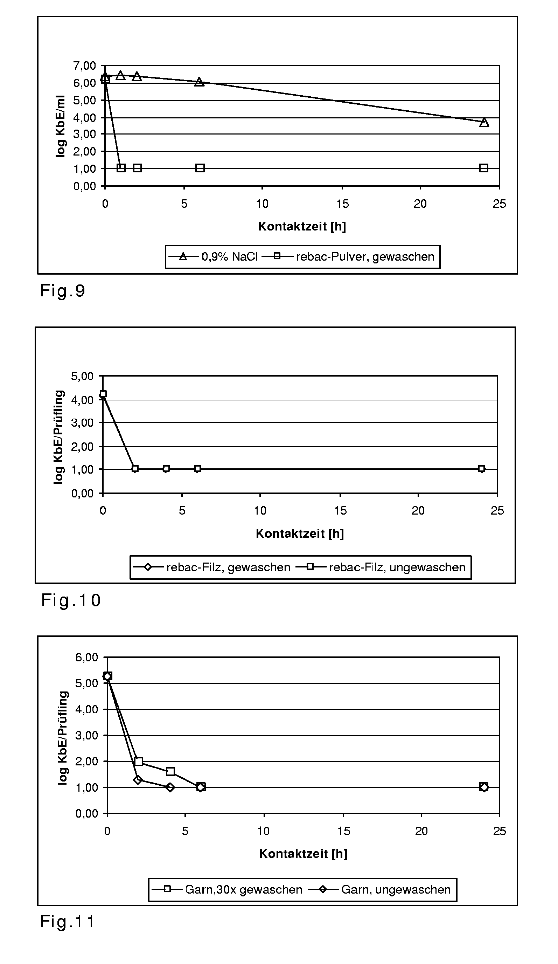

Graphik siehe Fig. 9.

### Beispiel 3.10: Absterben von Mikroorganismen bei Behandlung mit gewaschenen/ungewaschenen rebac Mikropartikeln ("rebac-Pulver")

Material: Caseinpepton-Sojapepton-Medium (caso medium) für Bakterien (Fluka Chemie GmbH), Sabouraud-Glukose-Agar für Pilze (Fluka Chemie GmbH), sterile Kochsalzlösung, 0,9%, Vortexer (Heidolph, REAX 2000), McFarland Standard 0,5, rebac-Pulver ("gewaschen": 2 x 12g von je 2 Chargen wurden in einer Soxhlett-Apparatur mit 100 ml VE Wasser über einen Zeitraum von 6 Stunden extrahiert).

Testkeime: *E. coli* ATCC 8739, *S. aureus* ATCC 25923, C. *albicans* ATCC 10312

Es wurde eine Suspension aus 10 Gew.-% rebac-Pulver und Kochsalzlösung hergestellt. Für jeden Testorganismus wurden 5 ml der Suspension in sterile Reagenzgläser gefüllt. 5 ml Kochsalzlösung ohne rebac-Pulver dienten als Kontrolle.

Test der antibakteriellen Aktivität: 1-5 Kolonien einer 18-24 h Übernacht-Kultur wurden in NaCl-Lösung suspendiert, so dass eine Keimzahl von circa 1x10⁸KBE/ml (entspricht McFarland Standard 0,5) erreicht wurde. 50 µl-Aliquots wurden in die Reagenzgläser mit rebac-Pulver oder Kontrolle gegeben, resultierend in einer Endkeimzahl von 1x10⁶KBE/ml. Die Proben wurden unter leichter Bewegung bei 37°C inkubiert. Nach einer Einwirkungsdauer von 0 h, 0,5 h, 1 h, 2 h, 4 h, 6 h, 24 h und 48 h wurde ein Aliquot von 50 µl in einer 1:10 (v/v)-Verdünnungsreihe in steriler Kochsalzlösung auf 10⁻⁵ verdünnt. Von jeder Verdünnungsstufe wurden 50 µl auf Caseinpepton-Sojapepton-Agar ausplattiert. Die Agarplatten der Bakterien wurden bei 36°C±1°C für 18-24 h inkubiert. Um die Keimzahl zu ermitteln, wurden die nach der Bebrütung auf dem Agar gewachsenen Kolonien ausgezählt und die Keimzahl auf 1 ml umgerechnet (Kolonie-bildende Einheiten pro ml = KBE/ml).

Test der antimykotischen Aktivität: Ein Aliquot des Pilzes wurde in die Reagenzgläser mit rebac-Pulver oder Kontrolle gegeben, resultierend in einer Endkeimzahl von 1x10⁶KBE/ml. Die Proben wurden unter leichter Bewegung bei 37°C inkubiert. Nach einer Einwirkungsdauer von 0 h, 0,5 h, 1 h, 2 h, 4 h, 6 h, 24 h und 48 h wurde ein Aliquot von 50 µl in einer 1:10 (v/v)-Verdünnungsreihe in steriler Kochsalzlösung auf 10⁻⁵ verdünnt. Von jeder Verdünnungsstufe wurden 50 µl auf Sabouraud-Medium ausplattiert. Nach Inkubation bei Raumtemperatur für 5 Tage wurden die auf dem Agar gewachsenen Kolonien ausgezählt und die Keimzahl auf 1 ml umgerechnet (Kolonie-bildende Einheiten pro ml = KBE/ml).

**Tab. 15: Waschtests Pulver**

| | *E. coli,* NaCl-Kontrolle | | | *E. coli,* ungewaschen | | | *E. coli,* gewaschen | | |
|---|---|---|---|---|---|---|---|---|---|
| Zeit (h) | KBE/ml | log KBE/ml - | Diff. log. t₍ₓ₎ t₍₀₎ | KBE/ml | log KBE/ml | Diff. log. t₍ₓ₎ - t₍₀₎ | KBE/ml | log KBE/ml | Diff. log. t₍ₓ₎ - t₍₀₎ |
| 0 | 1,80E+ 06 | 6,26 | 0,0 | 1,62E+ 06 | 6,21 | 0,0 | 1,78E+06 | 6,25 | 0,0 |
| 48 | 1,74E+ 06 | 6,24 | 0,0 | <20 | <1,30 | -4,9 | <20 | <1,30 | -5,0 |
| | | | | | | | | | |

| | *S. aureus* ATCC 25923 NaCl-Kontrolle | | | *S. aureus,* ungewaschen | | | *S. aureus,* gewaschen | | |
|---|---|---|---|---|---|---|---|---|---|
| Zeit (h) | KBE/ml | log KBE/ml - | Diff. log. t(x) t₍₀₎ | KBE/ml | log KBE/ml | Diff. log. t₍ₓ₎ - t₍₀₎ | KBE/ml | log KBE/ml | Diff. log. t₍ₓ₎ - t₍₀₎ |
| 0 | 1,24E+ 06 | 6,09 | 0,0 | 1,18E+ 06 | 6,07 | 0,0 | 1,20E+06 | 6,08 | 0,0 |
| 48 | 8,60E+ 05 | 5,93 | -0,2 | <20 | <1,30 | -4,8 | <20 | <1,30 | -4,8 |
| | | | | | | | | | |

| | *C. albicans* ATCC 10312 NaCl-Kontrolle | | | C. *albicans,* ungewaschen | | | C. *albicans,* gewaschen | | |
|---|---|---|---|---|---|---|---|---|---|
| Zeit (h) | KBE/ ml | log KBE/ml | Diff. log. t₍ₓ₎ - t₍₀₎ | KBE/ml | log KBE/ml | Diff. log. t₍ₓ₎ - t₍₀₎ | KBE/ml | log KBE/ml | Diff. log. t₍ₓ₎ - t₍₀₎ |
| 0 | 8,60 E+05 | 5,93 | 0,0 | 1,00E+ 06 | 6,00 | 0,0 | 1,28E+06 | 6,11 | 0,0 |
| 48 | 1,50 E+06 | 6,18 | 0,2 | <20 | <1,30 | -4,7 | <20 | <1,30 | -4,8 |

### Beispiel 3.11: rebac-Pulver, gewaschen (s. Bsp. 3.10) und ungewaschen, mit S. epidermidis

Prüfkeim: *S. epidermidis* (ATCC 12228 bzw. DSMZ 1798)

Methode: Agardilutionstest in Anlehnung an DIN 58 940 (1989)

0,9997 g rebac-Pulver wurden in ein steriles Reagenzglas eingewogen. 1 ml steriles VE-Wasser wurde zugegeben und der Röhrcheninhalt auf dem Vortex gemischt. Dem Röhrchen wurden im Wasserbad bei 44 °C 18,0 ml Müller-Hinton-Agar zugegeben, auf dem Vortex gemischt und in eine Petrischale ausgegossen. Für die Kotrolle wurde 2 ml steriles VE-Wasser mit 18 ml Agar vermischt und wie oben behandelt.

Koloniezahlbestimmung nach dem Koch' sehen Plattengussverfahren: S. epidermidis wurde in Müller-Hinton-Bouillon angeimpft. Dazu wurde ca. 1 Öse (10 µl) Material von einer Schrägagarkultur entnommen und in 20 ml Bouillon geimpft. Die Bebrütung erfolgte schüttelnd (200 min⁻¹) bei 37 °C. Ergebnis: nach 20 h Bebrütung 12E+8 KBE/ml, nach 44 h Bebrütung ebenfalls.

Beimpfung der Test- und Kontrollpatten: Jeweils 1 µl der Kultur wurde auf eine vorher markierte Stelle auf die Platten aufgebracht und auf eine kreisrunde Fläche von ca. 0,5 cm² ausgespatelt. Die Platten wurden bei 37°C 20 h bebrütet. Danach erfolgte eine visuelle Begutachtung und nochmals 24 h Bebrütung.

Ergebnis nach 20 h:
VE-Wasser-Kontrollen: dichter Bakterienrasen
gewaschenes und ungewaschenes rebac-Pulver: kein Wachstum.

Ungewaschenes und gewaschenes rebac-Pulver in der Konzentration von 5% war also im Vergleich zur Kontrolle sehr gut geeignet, das Wachstum des Teststamms über den Testzeitraum vollständig zu inhibieren.

### Beispiel 3.12: rebac-Filz im Waschtest mit Brevibakterium epidermidis

Gewaschener Filz wurde 30mal bei 60 °C gewaschen.

| | |
|---|---|
| Testmethode | AATCC 100 |
| Volumen Keimsuspension | 500 µl |
| Kontakttemperatur | 36 °C |
| Nachweisgrenze | < 10 KbE/Prüfling |
| Testkeim | *Brevibacterium epidermidis* (DSM 20660) |

**Tab. 16: Filz mit Brevibakterium**

| Probenbezeichnung bezeichnung | Kommentar | Kontaktzeit [h] | Ergebnis | | | |
|---|---|---|---|---|---|---|
| | | | KbE/ Prüfling | log KbE/ Prüfling | Diff. log. T(x) - T(0) | %-Reduktion |
| REBAC-Filz, ungewaschen | + Wirksubstanz | 0 | 1,70E+04 | 4,23 | 0,0 | 0,00 |
| | + Wirksubstanz | 2 | 1,00E+01 | 1,00 | -3,2 | 99,94 |
| | + Wirksubstanz | 4 | 1,00E+01 | 1,00 | -3,2 | 99,94 |
| | + Wirksubstanz | 6 | 1,00E+01 | 1,00 | -3,2 | 99,94 |
| | + Wirksubstanz | 24 | 1,00E+01 | 1,00 | -3,2 | 99,94 |
| | | | | | | |
| REBAC-Filz, gewaschen | + Wirksubstanz | 0 | 1,50E+04 | 4,18 | 0,0 | 0,00 |
| | + Wirksubstanz | 2 | 1,00E+01 | 1,00 | -3,2 | 99,93 |
| | + Wirksubstanz | 4 | 1,00E+01 | 1,00 | -3,2 | 99,93 |
| | + Wirksubstanz | 6 | 1,00E+01 | 1,00 | -3,2 | 99,93 |
| | + Wirksubstanz | 24 | 1,00E+01 | 1,00 | -3,2 | 99,93 |

| | | | | | | |
|---|---|---|---|---|---|---|
| "1,00E+01": < 10 KbE/Prüfling | | | | | | |

Graphik siehe Fig. 10.

### Beispiel 3.13: rebac-Garn, gewirkt im Waschtest (30% Rebac-Faser)

Gewaschenes Garn wurde 30mal bei 60 °C gewaschen.

| | |
|---|---|
| Testmethode | AATCC 100 |
| Volumen Keimsuspension | 1 ml |
| Kontakttemperatur | 36 °C |
| Nachweisgrenze | < 10 KbE/Prüfling |
| Testkeim | *S. aureus* DSM 799 |

**Tab. 17: Waschtest Garn mit S. aureus**

| Probenbezeichnung | Kommentar | Kontaktzeit [h] | Ergebnis | | | |
|---|---|---|---|---|---|---|
| | | | KbE/ Prüfling | log KbE/ | Diff. log. T(x) - | %-Reduktion |
| rebac-Garn,30xgewaschen | + Wirksubstanz | 0 | 1,70E+05 | 5,23 | 0,0 | 0,00 |
| | + Wirksubstanz | 2 | 9,00E+01 | 1,95 | -3,3 | 99,95 |
| | + Wirksubstanz | 4 | 4,00E+01 | 1,60 | -3,6 | 99,98 |
| 0,25 g Probe eingesetzt | + Wirksubstanz | 6 | 1,00E+01 | 1,00 | -4,2 | 99,99 |
| | + Wirksubstanz | 24 | 1,00E+01 | 1,00 | -4,2 | 99,99 |
| | | | | | | |
| rebac-Garn,ungewaschen | + Wirksubstanz | 0 | 1,70E+05 | 5,23 | 0,0 | 0,00 |
| | + Wirksubstanz | 2 | 2,00E+01 | 1,30 | -3,9 | 99,99 |
| | + Wirksubstanz | 4 | 1,00E+01 | 1,00 | -4,2 | 99,99 |
| 0,40 g Probe eingesetzt | + Wirksubstanz | 6 | 1,00E+01 | 1,00 | -4,2 | 99,99 |
| | + Wirksubstanz | 24 | 1,00E+01 | 1,00 | -4,2 | 99,99 |

| | | | | | | |
|---|---|---|---|---|---|---|
| "1,00E+1": < 10 KbE/Prüfling | | | | | | |

Graphik siehe Fig. 11.

### Beispiel 3.14: rebac-Garn im Waschtest (30% Rebac-Faser)

Gewaschenes Garn wurde 30mal bei 60 °C mit herkömmlicher Methode gewaschen.

| | |
|---|---|
| Testmethode | AATCC 100 |
| Volumen Keimsuspension | 250 µl |
| Kontakttemperatur | 25 °C |
| Nachweisgrenze | < 10 KbE/Prüfling |
| Testkeim | *S. aureus* DSM 799 |

**Tab. 18: Waschtest Garn mit S. aureus**

| Probenbezeichnung | Kommentar | Kontakt- zeit [h] | Ergebnis | | | |
|---|---|---|---|---|---|---|
| | | | KbE/ Prüfling | log KbE/ Prüfling | Diff. log. T(x) - T(0) | %-Reduktion |
| rebac-Garn | + Wirksubstanz | 0 | 1,00E+05 | 5,00 | 0,0 | 0,00 |
| | + Wirksubstanz | 2 | 1,00E+01 | 1,00 | -4,0 | 99,99 |
| | + Wirksubstanz | 4 | 1,00E+01 | 1,00 | -4,0 | 99,99 |
| | + Wirksubstanz | 6 | 1,00E+01 | 1,00 | -4,0 | 99,99 |
| | + Wirksubstanz | 24 | 1,00E+01 | 1,00 | -4,0 | 99,99 |
| | | | | | | |
| rebac-Garn(30x gew.) | + Wirksubstanz | 0 | 1,10E+05 | 5,04 | 0,0 | 0,00 |
| | + Wirksubstanz | 2 | 1,00E+01 | 1,00 | -4,0 | 99,99 |
| | + Wirksubstanz | 4 | 1,00E+01 | 1,00 | -4,0 | 99,99 |
| | + Wirksubstanz | 6 | 1,00E+01 | 1,00 | -4,0 | 99,99 |
| | + Wirksubstanz | 24 | 1,00E+01 | 1,00 | -4,0 | 99,99 |

| | | | | | | |
|---|---|---|---|---|---|---|
| "1,00E+1": < 10 KbE/Prüfling | | | | | | |

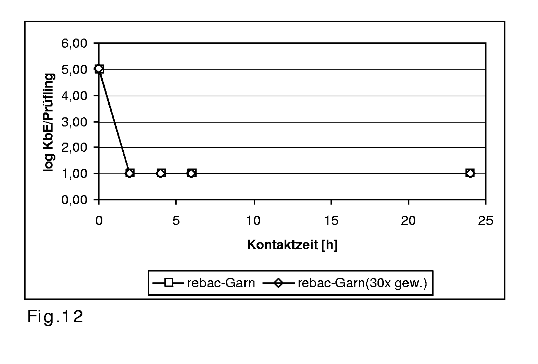

Graphik siehe Fig. 12.

### Beispiel 4: Zusammensetzung rebac-Vlies und rebac-Filz

Das rebac-Vlies (hergestellt durch Heisspressen) setzt sich wie folgt zusammen: ca. 35 Gew.-% rebac-Faser, 65 Gew-% Bikomponentenfaser (Kern Polypropylen, Mantel Polyethylen).

Der rebac-Filz (hergestellt durch Nadelfilzverfahren) setzt sich wie folgt zusammen: ca. 35 Gew.-% rebac-Faser, 65 Gew-% Bikomponentenfaser (Kern Polypropylen, Mantel aus Polyethylen).

### Beispiel 5: Zusammensetzung rebac-Garn

Das in Bsp. 3 verwendete rebac-Garn setzt sich wie folgt zusammen: ca. 30 Gew.-% rebac-Faser, 40 Gew.-% Polyester-Faser, 30 Gew.-% Viskose-Faser.

### Beispiel 6: Vergleich der antimikrobiellen Wirkung zwischen dem Produkt von Beispiel 1 und einem Material, das weniger nichtmetallische Kationen enthält

Eine Probe des nach dem Verfahren von Beispiel 1 hergestellten Materials ("Probe A") wurde mit einer Probe aus einem Material, das 80% weniger nichtmetallisches Kation enthielt ("Probe C"), hinsichtlich der antimikrobiellen Wirkung in verschiedenen Konzentrationen verglichen. Die getesteten Mikroorganismen waren *Staphylococcus aureus* ATCC 6538 (1), *Bacillus subtilis* ATCC 9372 (2) und *Candida albicans* ATCC 76615 (3). Testverfahren: Minimale Inhibitorische Konzentration (MIC) gemäß der Definition durch den Technical Standard for Disinfection 2002, China National Health Inspection. Die Ergebnisse sind in Tabelle 19 gezeigt.

**Tab. 19: Antimikrobielle Wirkung von PAN mit derselben Menge an gebundenen Metallkationen, aber unterschiedlichen Mengen an nichtmetallischen Kationen ("-": kein Mikrobenwachstum; "+": Mikrobenwachstum).**

| Konzentration [mg/ml] | 100 | 50 | 25 | 12.5 | 6.25 | 3.13 | 1.56 | 0.78 | 0 (Kontr.) |
|---|---|---|---|---|---|---|---|---|---|
| Probe A | | | | | | | | | |
| 1 | - | - | - | - | - | - | - | - | + |
| 2 | - | - | - | - | - | - | - | - | + |
| 3 | - | - | - | - | - | - | - | - | + |

| Probe C | | | | | | | | | |
|---|---|---|---|---|---|---|---|---|---|
| 1 | - | - | + | + | + | + | + | + | + |
| 2 | - | - | - | + | + | + | + | + | + |
| 3 | - | - | - | + | + | + | + | + | + |

### Beispiel 7: Antimikrobielle Wirkung des Materials von Beispiel 1 in PUR-Schaum

Aus einer 18 h alten Kultur von *S. aureus* (ATCC 25923) auf Caseinpepton-Sojapepton-Agar-Platten (Fluka) wurde eine Suspension hergestellt, die etwa 10⁶ KbE/ml enthielt. 1 cm x 1 cm große Testquadrate aus PUR-Schaum (Metzeler), die entweder 0 % oder 0,7 % des Materials aus Beispiel 1 enthielten, wurden mit der Suspension getränkt und bei Raumtemperatur in sterilen Petri-Schalen inkubiert, die mit Parafilm versiegelt waren.

Nach 0 h, 2 h, 4 h, 7 h oder 24 h Inkubationszeit wurde ein Testquadrat 30 s lang mit dem Vortexmischer mit 5 ml 0,9%igem wässrigem NaCl in einem Reagenzglas gemischt. Dann wurde ein Aliquot des Überstands mit 0,9%igem NaCl in Schritten von 1:10 bis herunter auf 10⁻⁵ verdünnt. Von jedem Verdünnungsschritt wurden 50 µl auf Caseinpepton-Sojapepton-Agar ausgestrichen. Die Platten wurden 18-24 h lang bei 36 °C ± 1 °C inkubiert. Dann wurde die Zahl der KbE/ml durch Zählen der Kolonien bestimmt.

Die Ergebnisse dieser Absterbkinetik sind in Tabelle 20 gezeigt:

| | 0% | | 0.7% | |
|---|---|---|---|---|
| Zeit [h] | KBE/ml | KBE/ml [%] | KBE/ml | KBE/ml [%] |
| 0 | 6.4x10⁵ | 100 | 5.6x10⁵ | 100 |
| 2 | 5.8x10⁵ | 90.6 | 1.9x10⁴ | 0.3 |
| 4 | 5.3x10⁵ | 82.8 | 1.3x 10³ | 0.002 |
| 7 | 5.1x10⁵ | 79.7 | 1.0x10² | 0.0002 |
| 24 | 4.3x10⁵ | 67.2 | < 100 | < 0.0002 |

Die Zahl der Mikroben wurde also durch einen Schaumstoff, der 0,7% Material von Beispiel 1 enthielt, nach zwei Stunden um mehr als 99% und nach vier Stunden kontinuierlich bis zu 24 h um mehr als 99,9% reduziert. Dieser Schaumstoff ist also bakterizid gemäß DIN 58940.

### Beispiel 8: Diffusionstest des Materials von Beispiel 1

Aus einer 18 h alten Kultur von *S. aureus* (ATCC 25923) auf Caseinpepton-Sojapepton-Agar-Platten wurde eine Suspension, die etwa 10⁸ KbE/ml enthielt, hergestellt, indem man 1-5 Kolonien in wenigen ml 0,9%iger (w/v) NaCl-Lösung löste, bis eine Trübung von 0,5 (McFarland-Standard) erreicht wurde.

Drei Agarplatten wurden jeweils mit 10⁷ KbE/ml, 10⁶ KbE/ml bzw. 10⁵ KbE/ml geimpft. Sobald die Suspension in die Oberfläche der Platten eingetrocknet war, wurden 2,5 cm x 2,5 cm große Testproben eines PUR-Schaums (Metzeler), der 0,7% des Materials von Beispiel 1 enthielt, in die Mitte jeder Platte gegeben. Die Platten wurden 18-22 h lang bei 36 °C inkubiert.

Ergebnis: Keine Diffusion des antibakteriellen Materials von Beispiel 1 in die Platte wurde nachgewiesen.

### Beispiel 9: Antimikrobielle Wirkung von rebac-Pulver auf der Haut

Zur Überprüfung der Wirksamkeit wurde 6 Patienten rebac-Pulver als Puder (10% rebac-Pulver (Mikropartikel), 90 % Talkum) oder Cremezubereitung (10% rebac-Pulver (Mikropartikel), 90 % Öl-Wasser-Emusion auf Basis von Glycerin-Monostearat) ausgehändigt, vorher wurden Abstriche für mykologische und bakteriologische Untersuchungen von der befallenen Hautstelle entnommen.

Nach ca. 20 Tagen erfolgt Wiedereinbestellung des Patienten und erneute Abstrichentnahme wie oben beschrieben, sowie Therapiekontrolle durch den Dermatologen.

**Tab. 21: Testpersonen**

| Proband | Alter | Geschlecht | Diagnose | Puder/Creme |
|---|---|---|---|---|
| 1 | 24 | m | Intertrigo | Creme |
| 2 | 1,5 | m | Windeldermatitis | Puder |
| 3 | 42 | m | Intertrigo | Creme |
| 4 | 84 | w | Intertrigo | Creme |
| 5 | 1 | w | Windeldermatitis | Puder |
| 6 | 0,5 | w | Windeldermatitis | Puder |

Mikrobielle Besiedlung der Hauteffloreszenzen bei der Eingangsuntersuchung: Die Abstriche der Hautinfektionen bei der Erstvorstellung zeigten verschiedene Bakterien und auch Pilze, klinisch relevante Antibiotika-Resistenzen waren nicht vorhanden (Tab. 22).

**Tab. 22: Mikrobielle Besiedlung der Patienten**

| Proband | Bakterien | Pilze | relevante Resistenzen |
|---|---|---|---|
| 1 | *E. coli* / *S. aureus* | keine | keine |
| 2 | keine | Candida spezies | keine |
| 3 | *S. aureus* | *Trichophyton rubrum* | keine |
| 4 | *Citrobacter koseri* | keine | keine |
| 5 | *E. coli* | Candida spezies | keine |
| 6 | Keine | Candida spezies | keine |

Bei 3 Probanden (2* Windeldermatitis, 1* Intertrigo) kam es zur Abheilung der bei Beginn bestehenden Hauteffloreszenzen. Bei den verbleibenden 3 Patienten konnte bei der Abschlußuntersuchung nur noch eine leichte Rötung gesehen werden.

Bei der Abschlußuntersuchung konnten bei keinem Probanden hautpathogene Pilze oder Bakterien im Abstrich gefunden werden.

Die Zubereitungen waren also in der Lage, oberflächliche, ambulant erworbene mikrobielle Hautinfektionen zu bekämpfen.

Zusammenfassend wurde aus dermatologischer Sicht festgestellt, dass die Präparate REBAC^{®} Puder und REBAC^{®} Creme von den Testpersonen sehr gut vertragen wurden. Es kam in 3 Fällen zu einer Abheilung und in 3 Fällen zu einer fast vollständigen Abheilung der bei Erstuntersuchung bestehenden mikrobiellen Hautveränderungen.

## Patentansprüche

1. Antimikrobielles Material, im Wesentlichen bestehend aus einem Trägerpolymer, an welches metallische und nichtmetallische Kationen gebunden sind, wobei das Trägerpolymer ein Copolymer ist, welches aus mindestens drei Monomerarten besteht, wobei das erste Monomer ein Acrylnitril oder ein Acrylnitril-Derivat ist, das zweite Monomer ein Acrylsäureester oder ein Acrylsäureester-Derivat ist und das dritte Monomer ein Ethylen-Derivat ist, das einen aromatischen Rest enthält, der wenigstens eine Säuregruppe trägt.

2. Antimikrobielles Material gemäß Anspruch 1, wobei das dritte Monomer die Formel 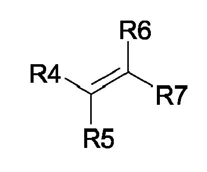 hat, wobei
R⁴ = -Aryl-(CHR⁸)ₙ-CO₂H oder -Aryl-C(CHR⁸)ₙSO₃H ist (wobei der Arylrest aromatisch oder heteroaromatisch und bevorzugt ein Monozyklus, besonders bevorzugt ein aromatischer Fünf- oder Sechsring ist, und wobei dieser Arylrest weiterhin mit einem oder mehreren Resten R⁸ substituiert sein kann; wobei R⁸ Wasserstoff, eine C₁₋₅-Alkylgruppe oder eine halogenierte C₁₋₅-Alkylgruppe und vorzugsweise Wasserstoff ist, und n eine ganze Zahl von 0 bis 5, vorzugsweise 0 oder 1, ist),
R⁵ CO₂H, CO₂R⁶, eine C₁₋₅-Alkylgruppe, eine halogenierte C₁₋₅-Alkylgruppe oder Wasserstoff ist,
R⁶ und R⁷ unabhängig voneinander Wasserstoff, eine C₁₋₅-Alkylgruppe oder eine halogenierte C₁₋₅-Alkylgruppe sind, oder R⁵ und R⁷, zusammen mit der Doppelbindung, einen 5-, 6- oder 7-gliedrigen Ring oder einen Polyzyklus bedeuten können,
besonders bevorzugt R⁵ Wasserstoff oder CO₂H ist und R⁶ und R⁷ Wasserstoff sind; die Konfiguration E oder Z ist; und es sich entweder um eine freie Säure oder ein entsprechendes Salz handelt.

3. Antimikrobielles Material gemäß Anspruch 2, wobei das dritte Monomer ein Styrolderivat ist und vorzugsweise die Formel 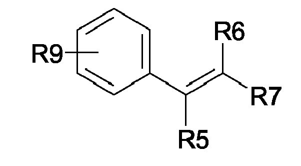 hat, wobei R⁹ = -(CHR⁸)ₙ-CO₂H oder -C(CHR⁸)ₙSO₃H ist (wobei R⁸ Wasserstoff, eine C₁₋₅-Alkylgruppe oder eine halogenierte C₁₋₅-Alkylgruppe und vorzugsweise Wasserstoff ist, und n eine ganze Zahl von 0 bis 5, vorzugsweise 0 oder 1, ist), bevorzugt R⁹ = -SO₃H, -CO₂H -CH₂SO₃H oder - CH₂CO₂H ist und sich in o-, m- oder p-Position, vorzugsweise in p-Position, befindet; R5, R6 und R7 die in Anspruch 2 angegebene Bedeutung haben, bevorzugt R⁵ Wasserstoff oder CO₂H ist und R⁶, R⁷ und R⁸ Wasserstoff sind.

4. Antimikrobielles Material gemäß einem oder mehreren der Ansprüche 1 bis 3, wobei
(i) das erste Monomer die Formel 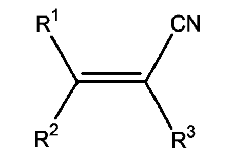 hat, wobei R¹, R² und R³ unabhängig voneinander Wasserstoff, eine C₁₋₅-Alkylgruppe oder eine halogenierte C₁₋₅-Alkylgruppe sind, und wobei R² und R³, zusammen mit der Doppelbindung, einen 5-, 6- oder 7-gliedrigen Ring oder einen Polycyclus bilden können, wobei vorzugsweise R¹ Wasserstoff oder eine C₁₋₅-Alkylgruppe ist und R² und R³ Wasserstoff sind, und am meisten bevorzugt R¹, R² und R³ Wasserstoff sind, und wobei das Monomer E- oder Z-Konfiguration haben kann; und/oder
(ii) das zweite Monomer aus C₁₋₅-Alkylestern von Säuren, die aus der Gruppe umfassend Acrylsäure, Methacrylsäure und Crotonsäure ausgewählt sind, ausgewählt ist und es sich dabei vorzugsweise um Methyl- oder Ethylacrylat handelt.

5. Antimikrobielles Material gemäß einem der Ansprüche 1 bis 4, wobei
(i) das Verhältnis von Monomereinheiten im Copolymer 90 bis 96 Gew.-% erstes Monomer, 4 bis 8 Gew.-% zweites Monomer, 0,01 bis 1 Gew.-% drittes Monomer ist; und/oder
(ii) das erste Monomer Acrylnitril ist, das zweite Monomer Methylacrylat ist und das dritte Monomer Natriumstyrylsulfonat (SSS) ist; und/oder
(iii) die Metallionen an die Cyanogruppen der ersten Monomereinheiten des Copolymers gebunden sind und die nichtmetallischen Kationen an die Säuregruppen der dritten Monomereinheit des Copolymers gebunden sind.

6. Antimikrobielles Material gemäß einem der Ansprüche 1 bis 5, wobei
(i) das Metallion ein Ion der Silbergruppe ist, bevorzugt ein Kupfer-, Zink- oder Silberion, besonders bevorzugt ein Kupferion ist; und/oder
(ii) das nichtmetallische Kation eine antimikrobielle stickstoffhaltige Verbindung ist und wenigstens eine positive Ladung aufweist, vorzugsweise ein kationischer Farbstoff ist, besonders bevorzugt ein Methin-Farbstoff, Diazo-Farbstoff oder Triphenylmethanfarbstoff ist, noch bevorzugter ein Basic-Green-Farbstoff und am meisten bevorzugt Basic Green 4 ist.

7. Antimikrobielles Material gemäß einem der Ansprüche 1 bis 6, in welchem
(i) das Gewichtsprozentverhältnis von nichtmetallischen Kationen zu Metallionen nicht kleiner als 1,0 : 20,0 ist; und/oder
(ii) der Gehalt des Metallions von 0,01 bis 5 Gew.-%, bevorzugt von 0,1 bis 2,5 Gew.-%, besonders bevorzugt von 0,6 bis 2 Gew.-%, und der Gehalt des nichtmetallischen Kations von 0,03 bis 10 Gew.-%, bevorzugt von 0,1 bis 2 Gew.-%, besonders bevorzugt von 0,2 bis 1 Gew.-% beträgt.

8. Antimikrobielles Material gemäß einem der Ansprüche 1 bis 7, bei dem es sich um Mikropartikel, Fasern oder daraus hergestellte Produkte, insbesondere Textilien, handelt.

9. Antimikrobielles Material gemäß Anspruch 8, bei dem es sich um
(i) Mikropartikel handelt, bevorzugt mit einem Teilchendurchmesser von 20 bis 2000 µm, besonders bevorzugt mit einem Teilchendurchmesser von 32 bis 300 µm; oder um
(ii) Fasern oder ein aus Fasern bestehendes Material handelt, bevorzugt um ein Garn, Vlies, Filz, Gewebe, Gewirke oder Gestricke.

10. Verfahren zur Herstellung des antimikrobiellen Materials gemäß einem der oder mehreren der Ansprüche 1 bis 9, umfassend die Verknüpfung von Metallionen aus der Silbergruppe, bevorzugt von Kupfer-, Silber- und/oder Zinkionen, und nichtmetallischen Kationen mit einem Trägerpolymer, wie es in einem oder mehreren der Ansprüche 1 bis 5 definiert ist.

11. Verfahren gemäß Anspruch 10, umfassend die Schritte
(a) Inkubation des Metallsalzes aus der Silbergruppe mit dem Trägerpolymer;
(b) Inkubation des nichtmetallischen Kations mit dem Produkt aus Schritt (a).

12. Verfahren gemäß Anspruch 10 oder 11, das die folgenden Schritte umfasst:
(a) Inkubation des Trägerpolymers mit einer wässrigen Lösung des metallischen Kations bei einer Temperatur von mindestens 50°C, bevorzugt mindestens 70°C, für mindestens 20 min, unter ständigem Rühren;
(b) Zugabe eines Reduktionsmittels und mindestens 20 min Inkubation des Gemisches unter ständigem Rühren bei 60 bis 90°C, bevorzugt bei 70°C;
(c) Zugabe eines kationischen Farbstoffs zum Gemisch und Rühren des Gemischs für mindestens 20 min bei mindestens 80°C, bevorzugt bei mindestens 90 °C;
(d) Erhitzen des Gemisches für mindestens 20 min bei mindestens 80°C unter ständigem Rühren;
(e) Filtrieren des Gemischs; und
(f) Waschen und Trocknen des Gemischs.

13. Verfahren gemäß einem oder mehreren der Ansprüche 10 bis 12, wobei das Trägerpolymer im Verfahren als Mikropartikel, Faser, Vliesstoff, Garn oder Gewebe eingesetzt wird.

14. Textiles oder nichttextiles Produkt mit antimikrobiellen Eigenschaften, welches das Material gemäß einem oder mehreren der Ansprüche 1 bis 9 enthält oder aus diesem Material besteht.

15. Produkt gemäß Anspruch 14, welches
(i) mindestens 2 Gew.-% des antibakteriellen Materials gemäß einem oder mehreren der Ansprüche 1 bis 9 enthält, bevorzugt mindestens 25 Gew.-%, und besonders bevorzugt im wesentlichen aus diesem Material besteht; und/oder
(ii) welches kein weiteres antibakterielles Material enthält.

16. Produkt gemäß Anspruch 14 oder 15, welches ein textiles Produkt, bevorzugt eine Faser oder ein textiles Halb- und Fertigfabrikat, besonders bevorzugt ein Garn, Gewebe, Gewirke, Gestricke, Vlies oder Filz ist.

17. Produkt gemäß einem oder mehreren der Ansprüche 14 bis 16, welches
(i) ein Einwegprodukt; oder
(ii) ein Mehrwegprodukt ist, das gewaschen, chemisch oder auf andere Art und Weise gereinigt und dann wieder eingesetzt werden kann.

18. Pharmazeutische, veterinärmedizinische oder kosmetische antimikrobielle Zusammensetzung, die das Material gemäß einem oder mehreren der Ansprüche 1 bis 9 enthält.

19. Verwendung des Materials gemäß einem oder mehreren der Ansprüche 1 bis 9, des Produkts gemäß einem oder mehreren der Ansprüche 14 bis 17, oder der Zusammensetzung gemäß Anspruch 18 zur Reduzierung oder Vorbeugung der Ansiedlung oder Ausbreitung von Mikroorganismen, speziell von pathogenen Pilzen, Bakterien und/oder Schimmel.

20. Verwendung des Materials gemäß einem oder mehreren der Ansprüche 1 bis 9 zur Herstellung von textilen und nichttextilen Produkten mit antimikrobiellen Eigenschaften, insbesondere zur Herstellung des textilen Produkts gemäß einem oder mehreren der Ansprüche 14 bis 17 oder der Zusammensetzung gemäß Anspruch 18.
